(19) Europäisches Patentamt / European Patent Office / Office européen des brevets

(11) **EP 4 553 631 A2**

(12) **EUROPEAN PATENT APPLICATION**

(43) Date of publication:
14.05.2025 Bulletin 2025/20

(21) Application number: 24223227.0

(22) Date of filing: 30.04.2020

(51) International Patent Classification (IPC):
*G06F 3/0482* (2013.01)

(52) Cooperative Patent Classification (CPC):
G06F 3/017; G06F 1/3231; G06F 1/3265;
G06F 1/3287; G06F 3/0304; G06F 3/0482;
G06F 3/04847

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(62) Document number(s) of the earlier application(s) in accordance with Art. 76 EPC:
20933855.7 / 4 137 914

(71) Applicant: Shenzhen Yinwang Intelligent
Technologies Co., Ltd.
Shenzhen, Guangdong 518129 (CN)

(72) Inventors:
• ZHANG, Yefeng
  Shenzhen, 518129 (CN)
• HAN, Zhenhua
  Shenzhen, 518129 (CN)
• HUANG, Wei
  Shenzhen, 518129 (CN)
• MA, Rui
  Shenzhen, 518129 (CN)
• SHI, Jia
  Shenzhen, 518129 (CN)

(74) Representative: Gill Jennings & Every LLP
The Broadgate Tower
20 Primrose Street
London EC2A 2ES (GB)

Remarks:
•This application was filed on 24-12-2024 as a divisional application to the application mentioned under INID code 62.
•Claims filed after the date of filing of the application (Rule 68(4) EPC).

(54) **CONTROL METHOD AND APPARATUS BASED ON MID-AIR GESTURE, AND SYSTEM**

(57) Embodiments of this application provide a control method and apparatus based on a mid-air gesture, and a system, and relate to the field of automated driving technologies. After a user makes a mid-air gesture within a photographing range of a camera, the camera collects the mid-air gesture. After recognizing a target function corresponding to the mid-air gesture, a terminal device continuously adjusts, based on hold duration, a movement distance, or the like of the mid-air gesture within the photographing range, the target function corresponding to the mid-air gesture, so that the target function gradually changes to continuously adjust the target function. In this way, the user determines, in a timely manner, whether adjustment needs to be terminated, to avoid repeated adjustment caused because the user cannot complete adjustment at one time, so that an operation is simple. In addition, for a user in a front-passenger seat or a rear seat in an intelligent cockpit, the target function can be accurately adjusted by remotely inputting the mid-air gesture, and the target function can be adjusted without performing touch through getting up and the like, to greatly improve convenience and user experience.

FIG. 2A

201 Enable a display to display a user interface of an application

202 Obtain a mid-air gesture collected by a camera, where the mid-air gesture is a gesture whose distance from the display is greater than a preset threshold

203 Continuously adjust, based on a first distance by which the mid-air gesture moves within a photographing range, a target function corresponding to the mid-air gesture, where an adjustment amount for continuous adjustment is positively correlated with a first distance by which the mid-air gesture moves within the photographing range, or an adjustment amount for continuous adjustment is positively correlated with hold duration of the mid-air gesture within the photographing range

**Description**

**TECHNICAL FIELD**

This application relates to the field of automated driving (automated driving) technologies, and in particular, to a control method and apparatus based on a mid-air gesture, and a system.

**BACKGROUND**

Currently, with intelligent development of terminal devices, there are increasingly more manners for interaction between a user and a terminal device such as a mobile phone, a tablet computer, and an in-vehicle terminal. A mid-air gesture is an interaction manner that has emerged in recent years.

In an operation process of a common mid-air gesture, a correspondence between a mid-air gesture and a function is preset. Then, if the user makes a mid-air gesture within a perception range of the terminal device, the terminal device recognizes the mid-air gesture, and then determines and adjusts a function corresponding to the mid-air gesture. For example, if a preset function corresponding to a fist is to take a screenshot, the terminal device automatically takes a screenshot after recognizing a mid-air gesture of the user such as a fist.

In the foregoing process of controlling the terminal device based on the mid-air gesture, the mid-air gesture corresponds to a single type of function. However, as a variety and a quantity of applications on the terminal device increase, increasingly more functions need to be controlled by using the mid-air gesture. Clearly, how to control the terminal device by using the mid-air gesture is a problem that needs to be resolved.

**SUMMARY**

Embodiments of this application provide a control method and apparatus based on a mid-air gesture, and a system, to continuously detect a movement distance or hold duration of a mid-air gesture made by a user, and continuously adjust, based on the movement distance or the hold duration, a function corresponding to the mid-air gesture, so as to control a terminal device.

According to a first aspect, an embodiment of this application provides a control method based on a mid-air gesture. The method may be performed by a terminal device, or may be performed by a chip in the terminal device. The following describes the method by using an example in which the method is applied to the terminal device. The method includes: After a user makes a mid-air gesture within a photographing range of a camera, the camera collects the mid-air gesture; and after recognizing a target function corresponding to the mid-air gesture, the terminal device continuously adjusts, based on a first distance by which the mid-air gesture moves within the photographing range or the like, the target function corresponding to the mid-air gesture, so that the target function gradually changes to continuously adjust the target function. In this way, the user determines, in a timely manner, whether adjustment needs to be terminated, to avoid repeated adjustment caused because the user cannot complete adjustment at one time, so that an operation is simple. In addition, duration in which the user gazes at a screen when the user adjusts the target function is reduced, and driving safety is improved. Moreover, for a user in a front-passenger seat or a rear seat in an intelligent cockpit, the target function can be accurately adjusted by remotely inputting the mid-air gesture, and the target function can be adjusted without performing touch through getting up and the like, to greatly improve convenience and user experience.

In a feasible design, the first distance may be determined based on at least a focal length of the camera, a distance between the mid-air gesture and an optical center of the camera, and a second distance, where the second distance is used to indicate a distance by which a mid-air gesture on an imaging plane of the camera moves when the mid-air gesture moves within the photographing range. In this solution, the first distance by which the mid-air gesture of the user moves within the photographing range is accurately determined.

In a feasible design, to determine the first distance, the terminal device further determines a first location and a second location of the mid-air gesture on the imaging plane of the camera in a movement process, and determines the second distance based on a quantity of pixels between the first location and the second location and a size of the pixel. In this solution, the first distance by which the mid-air gesture of the user moves within the photographing range is accurately determined based on the second distance by which the mid-air gesture on the imaging plane moves.

In a feasible design, the first distance is less than or equal to a preset distance, and the preset distance is positively correlated with an arm length of an arm of the user. In this solution, the target function based on different users is flexibly adjusted.

In a feasible design, the terminal device recognizes a wrist bone point and an elbow bone point of the user, determines the arm length of the user based on three-dimensional coordinates of the wrist bone point and three-dimensional coordinates of the elbow bone point, and determines the preset distance based on the arm length. In this solution, the target function based on different users is flexibly adjusted.

In a feasible design, in a continuous adjustment process, starting from recognizing the mid-air gesture, the terminal device continuously adjusts, based on an adjustment amount per unit, the target function corresponding to the mid-air gesture, until the mid-air gesture moves by the first distance. The adjustment amount per unit of distance is a ratio of a total adjustment amount of the target function to the preset distance. In this solution, the target function is continuously adjusted.

In a feasible design, in a continuous adjustment process, the terminal device continuously adjusts, based on a ratio of the first distance to the preset distance, the target function corresponding to the mid-air gesture. In this solution, the target function is continuously adjusted.

In a feasible design, when determining the first distance, the terminal device inputs the focal length of the camera, the distance between the mid-air gesture and the optical center of the camera, and the second distance into a pre-trained preset model, and determines the first distance by using the preset model. In this solution, the first distance by which the mid-air gesture of the user moves within the photographing range is accurately determined.

In a feasible design, the terminal device further obtains a sample data set, where the sample data set includes a plurality of groups of sample data, and one group of sample data includes a focal length of a sample camera, a distance between a sample mid-air gesture and an optical center of the sample camera, and a sample second distance; and trains the preset model by using the plurality of groups of sample data in the sample data set. In this solution, the preset model is trained.

In a feasible design, after recognizing the mid-air gesture, the terminal device may further continuously adjust, based on an angle by which the mid-air gesture moves in space, the target function corresponding to the mid-air gesture, where an adjustment amount for continuous adjustment is positively correlated with the angle. In this solution, the terminal device can continuously adjust, based on the angle by which the mid-air gesture moves, the target function corresponding to the mid-air gesture, so that the target function gradually changes to continuously adjust the target function. In this way, the user determines, in a timely manner, whether adjustment needs to be terminated, to avoid repeated adjustment caused because the user cannot complete adjustment at one time, so that an operation is simple.

In a feasible design, when the terminal device recognizes the mid-air gesture, a function origin is displayed on a display, where the function origin is used to indicate that the terminal device has recognized the mid-air gesture and has waked up a function of the mid-air gesture. In this solution, the user is prompted.

In a feasible design, functions that are of different applications and that can be continuously adjusted correspond to a same mid-air gesture. In this solution, a same mid-air gesture is set for different applications, to avoid a problem that the user cannot distinguish between mid-air gestures due to an excessively large quantity of mid-air gestures, so as to reduce learning costs of the user. A same mid-air gesture is used for similar functions to meet human-computer interaction logic.

In a feasible design, different functions that are of an application and that can be continuously adjusted correspond to different mid-air gestures. In this solution, different mid-air gestures are set for different functions that are of a same application and that can be continuously adjusted, to conveniently and quickly adjust different functions that are of a same application and that can be continuously adjusted.

In a feasible design, the target function includes any one of the following functions: volume adjustment, audio/video progress adjustment, air-conditioner temperature adjustment, chair-back height adjustment, 360° around-view angle-of-view adjustment, vehicle-window height adjustment, skylight size adjustment, air-conditioner air volume adjustment, and atmosphere-lamp brightness adjustment. In this solution, the terminal device flexibly adjusts any function that can be continuously adjusted.

In a feasible design, when recognizing the mid-air gesture made by the user within the photographing range of the camera, the terminal device continuously performs photographing within the photographing range by using the camera; determines whether a latest photographed image frame includes the mid-air gesture; and if the latest photographed image frame includes the mid-air gesture, recognizes the mid-air gesture made by the user within the photographing range of the camera. In this solution, the terminal device recognizes the mid-air gesture.

According to a second aspect, an embodiment of this application provides a control method based on a mid-air gesture. The method may be applied to a terminal device, or may be applied to a chip in the terminal device. The following describes the method by using an example in which the method is applied to the terminal device. The method includes: After a user makes a mid-air gesture within a photographing range of a camera, the camera collects the mid-air gesture; and after recognizing a target function corresponding to the mid-air gesture, the terminal device continuously adjusts, based on hold duration of the mid-air gesture within the photographing range or the like, the target function corresponding to the mid-air gesture, so that the target function gradually changes to continuously adjust the target function. In this way, the user determines, in a timely manner, whether adjustment needs to be terminated, to avoid repeated adjustment caused because the user cannot complete adjustment at one time, so that an operation is simple. In addition, duration in which the user gazes at a screen when the user adjusts the target function is reduced, and driving safety is improved. Moreover, for a user in a front-passenger seat or a rear seat in an intelligent cockpit, the target function can be accurately adjusted by remotely inputting the mid-air gesture, and the target function can be adjusted without performing touch through getting up and the like, to greatly improve convenience and user experience.

In a feasible design, the hold duration includes first duration and second duration. In a first time period corresponding to the first duration, the mid-air gesture is continuously translated. In a second time period corresponding to the second duration, the mid-air gesture is still. The first time period is earlier than the second time period. In this solution, the target function is adjusted based on the hold duration of the mid-air gesture within the photographing range.

In a feasible design, when continuously adjusting, based on the hold duration of the mid-air gesture within the photographing range, the target function corresponding to the mid-air gesture, the terminal device first determines an adjustment amount per unit of time. Then, starting from recognizing the mid-air gesture, the terminal device continuously adjusts, based on the adjustment amount per unit of time, the target function corresponding to the mid-air gesture, until the mid-air gesture no longer appears within the photographing range. In this solution, the target function is adjusted based on the hold duration of the mid-air gesture within the photographing range.

According to a third aspect, an embodiment of this application provides a control method based on a mid-air gesture. The method is applied to a terminal device such as an in-vehicle terminal, and the in-vehicle terminal is disposed on a vehicle, and is connected to a camera, a display, and the like on the vehicle. After a user makes a mid-air gesture on a screen of the vehicle, the camera collects the mid-air gesture. After obtaining the mid-air gesture from the camera and recognizing a target function corresponding to the mid-air gesture, the in-vehicle terminal continuously adjusts, based on a movement distance, hold duration, or the like of the mid-air gesture within a photographing range of the camera, the target function corresponding to the mid-air gesture, so that the target function gradually changes to continuously adjust the target function. In this way, the user determines, in a timely manner, whether adjustment needs to be terminated, to avoid repeated adjustment caused because the user cannot complete adjustment at one time, so that an operation is simple. The camera may be a camera of a driver monitoring system (driver monitoring systems, DMS) of the vehicle, a collision mitigation system (collision mitigation system, CMS) of the vehicle, or the like. The in-vehicle terminal may obtain the mid-air gesture from the camera by using a Bluetooth connection, a Wi-Fi connection, or another connection. The screen may be a center console display screen (primary screen) on the vehicle, or may be a screen (secondary screen) disposed on the back of a vehicle seat, a dashboard screen in front of a steering wheel, or the like.

According to a fourth aspect, an embodiment of this application provides a control apparatus based on a mid-air gesture, including a display unit and a processing unit.

When the control apparatus based on a mid-air gesture is configured to perform the foregoing step of continuously adjusting the target function based on space, the display unit is configured to enable a display to display a user interface of an application; and the processing unit is configured to: obtain a mid-air gesture collected by a camera, and continuously adjust, based on a first distance by which the mid-air gesture moves within a photographing range of the camera, a target function corresponding to the mid-air gesture, where the mid-air gesture is a gesture whose distance from the display is greater than a preset threshold, the target function is a function that is of the application and that can be continuously adjusted, and an adjustment amount for continuous adjustment is positively correlated with the first distance.

In a feasible design, the first distance is determined based on at least a focal length of the camera, a distance between the mid-air gesture and an optical center of the camera, and a second distance, where the second distance is used to indicate a distance by which a mid-air gesture on an imaging plane of the camera moves when the mid-air gesture moves within the photographing range of the camera.

In a feasible design, before continuously adjusting, based on the first distance by which the mid-air gesture moves within the photographing range of the camera, the target function corresponding to the mid-air gesture, the processing unit is further configured to: determine a first location and a second location of the mid-air gesture on the imaging plane of the camera in a movement process, and determine the second distance based on a quantity of pixels between the first location and the second location and a size of the pixel.

In a feasible design, the first distance is less than or equal to a preset distance, and the preset distance is positively correlated with an arm length of an arm of a user.

In a feasible design, before continuously adjusting, based on the first distance by which the mid-air gesture moves within the photographing range of the camera, the target function corresponding to the mid-air gesture, the processing unit is further configured to: recognize a wrist bone point and an elbow bone point of the user, determine the arm length of the user based on three-dimensional coordinates of the wrist bone point and three-dimensional coordinates of the elbow bone point, and determine the preset distance based on the arm length.

In a feasible design, when continuously adjusting, based on the first distance by which the mid-air gesture moves within the photographing range of the camera, the target function corresponding to the mid-air gesture, the processing unit is configured to: determine an adjustment amount per unit of distance, where the adjustment amount per unit of distance is a ratio of a total adjustment amount of the target function to the preset distance, and starting from recognizing the mid-air gesture, continuously adjust, based on the adjustment amount per unit, the target function corresponding to the mid-air gesture, until the mid-air gesture moves by the first distance.

In a feasible design, when continuously adjusting, based on the first distance by which the mid-air gesture moves within the photographing range of the camera, the target function corresponding to the mid-air gesture, the processing unit is configured to: determine a ratio of the first distance to the preset distance, determine the adjustment amount based on the ratio, and continuously adjust, based on the adjustment amount, the target function corresponding to the mid-air gesture.

In a feasible design, before continuously adjusting, based on the first distance by which the mid-air gesture moves within the photographing range of the camera, the target function corresponding to the mid-air gesture, the processing unit is further configured to: input the focal length of the camera, the distance between the mid-air gesture and the optical center of the camera, and the second distance into a pre-trained preset model, and determine the first distance by using the preset model.

In a feasible design, the processing unit is further configured to: obtain a sample data set, where the sample data set includes a plurality of groups of sample data, and one group of sample data includes a focal length of a sample camera, a distance between a sample mid-air gesture and an optical center of the sample camera, and a sample second distance; and train the preset model by using the plurality of groups of sample data in the sample data set.

When the control apparatus based on a mid-air gesture is configured to perform the foregoing step of continuously adjusting the target function based on space, the display unit is configured to enable a display to display a user interface of an application; and the processing unit is configured to: recognize a mid-air gesture made by a user within a photographing range of a camera of a terminal device, where the mid-air gesture is a gesture whose distance from the display is greater than a preset threshold, and continuously adjust, based on hold duration of the mid-air gesture within the photographing range of the camera, a target function corresponding to the mid-air gesture, where the target function is a function that is of the application and that can be continuously adjusted, and an adjustment amount for continuous adjustment is positively correlated with the hold duration.

In a feasible design, the hold duration includes first duration and second duration. In a first time period corresponding to the first duration, the mid-air gesture is continuously translated. In a second time period corresponding to the second duration, the mid-air gesture is still. The first time period is earlier than the second time period.

In a feasible design, when continuously adjusting, based on the hold duration of the mid-air gesture within the photographing range of the camera, the target function corresponding to the mid-air gesture, the processing unit is configured to: determine an adjustment amount per unit of time, and starting from recognizing the mid-air gesture, continuously adjust, based on the adjustment amount per unit of time, the target function corresponding to the mid-air gesture, until the mid-air gesture no longer appears within the photographing range of the camera.

In a feasible design, when the terminal device recognizes the mid-air gesture, the display unit is further configured to display a function origin on the display, where the function origin is used to indicate that the terminal device has recognized the mid-air gesture and has waked up a function of the mid-air gesture.

In a feasible design, functions that are of different applications and that can be continuously adjusted correspond to a same mid-air gesture.

In a feasible design, different functions that are of a same application and that can be continuously adjusted correspond to different mid-air gestures.

In a feasible design, the target function includes any one of the following functions: volume adjustment, audio/video progress adjustment, air-conditioner temperature adjustment, chair-back height adjustment, 360° around-view angle-of-view adjustment, vehicle-window height adjustment, skylight size adjustment, air-conditioner air volume adjustment, and atmosphere-lamp brightness adjustment.

In a feasible design, when recognizing the mid-air gesture made by the user within the photographing range of the camera, the processing unit is configured to: continuously perform photographing within the photographing range of the camera by using the camera; determine whether a latest photographed image frame includes the mid-air gesture; and if the latest photographed image frame includes the mid-air gesture, recognize the mid-air gesture made by the user within the photographing range of the camera.

According to a fifth aspect, an embodiment of this application provides a terminal device, including one or more processors, one or more memories, and one or more computer programs, where the one or more computer programs are stored in the one or more memories, the one or more computer programs include instructions, and when the instructions are executed by the terminal device, the terminal device is enabled to perform the method in any one of the embodiments of the first aspect, or the terminal device is enabled to perform the method in any one of the embodiments of the second aspect, or the terminal device is enabled to perform the method in any one of the embodiments of the third aspect.

According to a sixth aspect, an embodiment of this application further provides a computer storage medium, including computer instructions, where when the computer instructions are run on a terminal device, the terminal device is enabled to perform the method in any one of the implementations, or the terminal device is enabled to perform the method in any one of the embodiments of the second aspect, or the terminal device is enabled to perform the method in any one of the embodiments of the third aspect.

According to a seventh aspect, an embodiment of this application further provides a computer program product, where when the computer program product runs on a terminal device, the terminal device is enabled to perform the method in any one of the implementations, or the terminal device is enabled to perform the method in any one of the embodiments of the second aspect, or the terminal device is enabled to perform the method in any one of the embodiments of the second aspect.

According to an eighth aspect, an embodiment of this application provides a terminal device, including a logic circuit and an input interface, where the input interface is configured to obtain to-be-processed data, and the logic circuit is configured to perform the method in any one of the implementations of the first aspect, the method in any one of the implementations of the second aspect to obtain processed data, or the method in any one of the implementations of the third aspect on the to-be-processed data, to obtain processed data.

In a feasible design, the terminal device further includes an output interface, where the output interface is configured to output the processed data.

According to a ninth aspect, an embodiment of this application provides an automated driving system, including: a vehicle body, and a camera, a display, and a control apparatus based on a mid-air gesture that are disposed on the vehicle body, where the camera and the display are separately connected to the control apparatus based on a mid-air gesture.

The display is configured to display a user interface of an application.

The camera is configured to collect a mid-air gesture made by a user, where the mid-air gesture is a gesture whose distance from the display is greater than a preset threshold.

The control apparatus based on a mid-air gesture is configured to perform the method in any one of the embodiments of the first aspect, or the control apparatus based on a mid-air gesture is configured to perform the method in any one of the embodiments of the second aspect, or the control apparatus based on a mid-air gesture is configured to perform the method in any one of the embodiments of the third aspect.

In conclusion, according to the control method and apparatus based on a mid-air gesture, and the system that are provided in this application, the movement distance or the hold duration of the mid-air gesture made by the user can be continuously detected, and the function corresponding to the mid-air gesture can be continuously adjusted based on the movement distance or the hold duration, to control the terminal device.

**BRIEF DESCRIPTION OF DRAWINGS**

FIG. 1 is **a** functional block diagram of an in-vehicle terminal used to perform a control method based on a mid-air gesture according to an embodiment of this application;
FIG. 2A is a flowchart of a control method based on a mid-air gesture according to an embodiment of this application;
FIG. 2B is a schematic diagram of a vehicle cockpit in which a control apparatus based on a mid-air gesture according to an embodiment of this application is disposed;
FIG. 3 is a schematic diagram of a function origin in a control method based on a mid-air gesture according to an embodiment of this application;
FIG. 4A is a schematic diagram of a process of a control method based on a mid-air gesture according to an embodiment of this application;
FIG. 4B is a schematic diagram of another process of a control method based on a mid-air gesture according to an embodiment of this application;
FIG. 5A and FIG. 5B are a schematic diagram of a display screen and a mid-air gesture in a control method based on a mid-air gesture according to an embodiment of this application;
FIG. 6 is a schematic diagram of a display screen and a mid-air gesture in a control method based on a mid-air gesture according to an embodiment of this application;
FIG. 7 is a flowchart of a control method based on a mid-air gesture according to an embodiment of this application;
FIG. 8 is a schematic diagram of a mid-air gesture in a control method based on a mid-air gesture according to an embodiment of this application;
FIG. 9 is a schematic diagram of a process of setting a continuable adjustment manner in a control method based on a mid-air gesture according to an embodiment of this application;
FIG. 10 is a schematic diagram of a process of determining a first distance in a control method based on a mid-air gesture according to an embodiment of this application;
FIG. 11 is a schematic diagram of a process of determining F in a control method based on a mid-air gesture according to an embodiment of this application;
FIG. 12 is a schematic diagram of a process of determining a second distance in a control method based on a mid-air gesture according to an embodiment of this application;
FIG. 13A to FIG. 13C are a schematic diagram of a process of adjusting a target function in a control method based on a mid-air gesture according to an embodiment of this application;
FIG. 14 is a schematic diagram of a process of detecting an arm length in a control method based on a mid-air gesture according to an embodiment of this application;

FIG. 15A to FIG. 15C are a schematic diagram of a process of adjusting a target function in a control method based on a mid-air gesture according to an embodiment of this application;

FIG. 16 is a schematic diagram of a process of detecting a mid-air gesture in a control method based on a mid-air gesture according to an embodiment of this application;

FIG. 17 is a schematic diagram of a structure of a control apparatus based on a mid-air gesture according to an embodiment of this application; and

FIG. 18 is a schematic diagram of a structure of a terminal device according to an embodiment of this application.

## DESCRIPTION OF EMBODIMENTS

Currently, with rapid development of vehicle technologies, vehicles are becoming increasingly more common, and vehicles have become one of important means of transportation in people's daily life. In addition, as a screen is added to an in-vehicle terminal, use of a function of the vehicle by a user is not limited to driving. In an intelligent cockpit of a future vehicle, human-computer intelligent interaction is a very important basic function. In human-computer interaction, interaction based on a mid-air gesture is an interaction manner that has emerged in recent years.

Compared with a hand-held mobile terminal, in the vehicle field, an in-vehicle terminal is fastened to a center console of a vehicle, and a screen of the in-vehicle terminal may also be referred to as a center console screen. A camera, a dashboard display screen, a screen on the back of a vehicle seat, and the like on the vehicle are not integrated with the in-vehicle terminal. As an entertainment function of an in-vehicle system and the like increase, the following is required: A driver can operate the in-vehicle terminal, and in addition, a front passenger can also operate the in-vehicle terminal by using the center console display screen, or even a rear-seat passenger can also operate a target function on the in-vehicle terminal by using a secondary screen. The secondary screen is a screen that is disposed on the back of a front seat and that faces the rear-seat passenger. A location of the camera on the vehicle is flexible, for example, a camera on some vehicles is located above a center console display screen of the vehicle, a camera on some vehicles is located on the left of a center console screen of the vehicle, and a location of a camera of a DMS or a CMS is even not related to the terminal device. In addition, locations of different users such as the driver, the front passenger, or the rear-seat passenger are different. As a result, a difficulty in controlling the target function on the in-vehicle terminal by using a mid-air gesture is increased. Clearly, how to perform continuous adjustment by using the mid-air gesture to control the terminal device is considered as a problem that is urgently to be resolved.

In view of this, embodiments of this application provide a control method and apparatus based on a mid-air gesture, and a system, to continuously adjust, by using hold duration, a movement distance, or the like of a mid-air gesture, a function corresponding to the mid-air gesture, so that the function gradually changes, to control a terminal device.

The control method based on a mid-air gesture in the embodiments of this application may be applied to a terminal device such as a smart screen and an in-vehicle terminal, and a user may perform human-computer interaction with the terminal device in a large range.

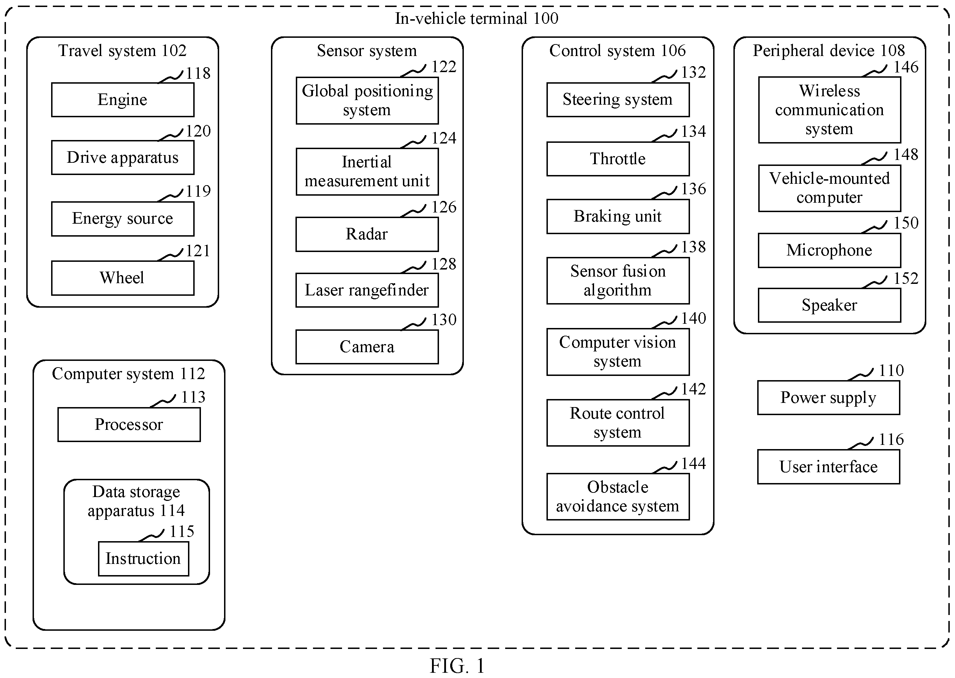

FIG. 1 is a functional block diagram of an in-vehicle terminal used to perform a control method based on a mid-air gesture according to an embodiment of this application. Referring to FIG. 1, an in-vehicle terminal 100 may include various subsystems such as a travel system 102, a sensor system 104, a control system 106, one or more peripheral devices 108, a power supply 110, a computer system 112, and a user interface 116. Optionally, the in-vehicle terminal 100 may include more or fewer subsystems, and each subsystem may include a plurality of elements. In addition, the subsystems and the elements of the in-vehicle terminal 100 may be interconnected in a wired or wireless manner.

The travel system 102 may include a component that provides movement power for a vehicle on which the in-vehicle terminal 100 is mounted. In an embodiment, the travel system 102 may include an engine 118, an energy source 119, a drive apparatus 120, and a wheel/tire 121. The engine 118 may be an internal combustion engine, a motor, an air compression engine, or a combination of other types of engines, for example, a hybrid engine including a gasoline engine and a motor or a hybrid engine including an internal combustion engine and an air compression engine. The engine 118 converts the energy source 119 into mechanical energy.

Examples of the energy source 119 include gasoline, diesel, other petroleum-based fuel, propane, other compressed gas-based fuel, ethanol, a solar panel, a battery, and another power source. The energy source 119 may also provide energy for another system of the in-vehicle terminal 100.

The drive apparatus 120 may transfer mechanical power from the engine 118 to the wheel 121. The drive apparatus 120 may include a gearbox, a differential, and a drive shaft. In an embodiment, the drive apparatus 120 may further include another component such as a clutch. The drive shaft may include one or more shafts that may be coupled to one or more wheels 121.

The sensor system 104 may include several sensors that sense information about an ambient environment of the vehicle. For example, the sensor system 104 may include a positioning system 122 (the positioning system may be a GPS system, or may be a BeiDou system or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, and an oil temperature gauge) of an internal system of the monitored vehicle. One or more pieces of sensor data from the sensor may be used to detect an object and a corresponding characteristic (a location, a shape, a direction, a speed, and the like) thereof.

The positioning system 122 may be configured to estimate a geographical location of the vehicle. The IMU 124 is configured to sense location and orientation changes of the vehicle based on an inertial acceleration. In an embodiment, the IMU 124 may be a combination of an accelerometer and a gyroscope.

The radar 126 may sense an object in the ambient environment of the vehicle by using a radio signal. In some embodiments, in addition to sensing an object, the radar 126 may be further configured to sense a speed and/or a proceeding direction of the object.

The laser rangefinder 128 may sense, by using a laser, an object in an environment in which the vehicle is located. In some embodiments, the laser rangefinder 128 may include one or more laser sources, a laser scanner, one or more detectors, and another system component.

The camera 130 may be configured to capture a mid-air gesture made by a user within a photographing range of the camera. The camera 130 may be a monocular camera, a binocular camera, a time of flight (Time of flight, TOF) camera, a camera of a DMS, a camera of a CMS, or the like.

The control system 106 controls operations of the vehicle and the component thereof. The control system 106 may include various elements, including a steering system 132, a throttle 134, a braking unit 136, a sensor fusion algorithm 138, a computer vision system 140, a route control system 142, and an obstacle avoidance system 144.

The steering system 132 may be operated to adjust a proceeding direction of the vehicle. For example, in an embodiment, the steering system 132 may be a steering wheel system.

The throttle 134 is configured to: control an operation speed of the engine 118, and control a speed of the vehicle.

The braking unit 136 is configured to control the vehicle to decelerate. The braking unit 136 may use friction to slow down the wheel 121. In another embodiment, the braking unit 136 may convert kinetic energy of the wheel 121 into a current. The braking unit 136 may reduce a rotation speed of the wheel 121 in another form, to control the speed of the vehicle.

The computer vision system 140 may be operated to process and analyze an image captured by the camera 130, to recognize an object and/or a feature in the ambient environment of the vehicle. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to: map an environment, track an object, estimate a speed of an object, and the like.

The route control system 142 is configured to determine a driving route of the vehicle. In some embodiments, the route control system 142 may determine the driving route for the vehicle based on data from the sensor 138, the global positioning system (global positioning system, GPS) 122, and one or more predetermined maps.

The obstacle avoidance system 144 is configured to recognize, evaluate, and avoid or bypass, in another manner, a potential obstacle in an environment of the vehicle.

Certainly, in an example, the control system 106 may add or alternatively include a component other than those shown and described in the figure. Alternatively, some of the foregoing components shown in the figure may be reduced.

The in-vehicle terminal 100 interacts with an external sensor, another vehicle, another computer system, or the user by using the peripheral device 108. The peripheral device 108 may include a wireless communication system 146, a display 148, a microphone 150, and/or a speaker 152.

In some embodiments, the peripheral device 108 provides a means for interaction between a user in the vehicle and the user interface 116. For example, the display 148 may display information to the user in the vehicle. The user interface 116 may further operate a vehicle-mounted computer to receive a user input. In another case, the peripheral device 108 may provide a means for communication between the in-vehicle terminal 100 and another device in the vehicle. For example, the microphone 150 may receive a voice command or another audio input of the user in the vehicle. Similarly, the speaker 152 may output audio to the user in the vehicle.

The wireless communication system 146 may perform wireless communication with one or more devices directly or by using a communication network. For example, the wireless communication system 146 may use 3G cellular communication such as code division multiple access (code division multiple access, CDMA), EVD0, a global system for mobile communications (global system for mobile communications, GSM)/general packet radio service (general packet radio service, GPRS), or 4G cellular communication such as LTE, or 5G cellular communication. The wireless communication system 146 may communicate with a wireless local area network (wireless local area network, WLAN) through wireless fidelity (wireless-fidelity, WiFi). In some embodiments, the wireless communication system 146 may directly communicate with a device through an infrared link, Bluetooth, or the ZigBee (ZigBee) protocol. Other wireless protocols such as various vehicle communication systems may be used, for example, the wireless communication system 146 may include one or more dedicated short-range communications (dedicated short range communications, DSRC) devices, and the devices may include public and/or private data communication between the vehicle and/or a roadside station.

The power supply 110 may supply power to various components of the vehicle. In an embodiment, the power supply 110 may be a rechargeable lithium-ion or lead-acid battery. One or more battery packs of the battery may be configured as a power supply to supply power to various components of the vehicle. In some embodiments, the power supply 110 and the energy source 119 may be implemented together, for example, configured together as in some battery electric vehicles.

Some or all functions of the in-vehicle terminal 100 are controlled by the computer system 112. The computer system 112 may include at least one processor 113. The processor 113 executes an instruction 115 stored in a non-transient computer-readable medium such as a data storage apparatus 114. The computer system 112 may be a plurality of computing devices that control an individual component or a subsystem of the in-vehicle terminal 100 in a distributed manner.

The processor 113 may be any conventional processor such as a commercially available central processing unit (central processing unit, CPU). Alternatively, the processor may be a dedicated device such as an application-specific integrated circuit (application specific integrated circuit, ASIC) or another hardware-based processor. A person of ordinary skill in the art should understand that the processor, a computer, or a memory may actually include a plurality of processors, computers, or memories that may or may not be stored in a same physical housing. For example, the memory may be a hard disk drive or another different storage medium located in a housing of the computer. Therefore, references to the processor or the computer are understood to include references to a set of processors or computers or memories that may or may not operate in parallel. Different from using a single processor to perform the steps described herein, some components such as a steering component and a deceleration component each may have a processor thereof. The processor performs only calculation related to a component-specific function.

In the various aspects described herein, the processor may be located far away from the vehicle, and perform wireless communication with the vehicle. In other aspects, some of the processes described herein are executed by the processor disposed in the vehicle, and other processes are executed by a remote processor, including necessary steps for performing a single operation.

In some embodiments, the data storage apparatus 114 may include the instruction 115 (for example, program logic), and the instruction 115 may be executed by the processor 113 to perform various functions of the in-vehicle terminal 100, including those functions described above. The data storage apparatus 114 may also include additional instructions, including instructions to send data to, receive data from, interact with, and/or control one or more of the travel system 102, the sensor system 104, the control system 106, and the peripheral device 108.

In addition to the instruction 115, the data storage apparatus 114 may further store data such as a road map, route information, a location, a direction, and a speed of a vehicle, other vehicle data, and other information. The information may be used by the in-vehicle terminal 100 and the computer system 112 when the vehicle is operated in an autonomous mode, a semi-autonomous mode, and/or a manual mode.

The user interface 116 is configured to provide information for or receive information from the user in the vehicle. Optionally, the user interface 116 may include one or more input/output devices in a set of peripheral devices 108, for example, the wireless communication system 146, the display 148, the microphone 150, and the speaker 152.

The computer system 112 may control a function of the in-vehicle terminal 100 based on inputs received from various subsystems (for example, the travel system 102, the sensor system 104, and the control system 106) and the user interface 116. For example, the computer system 112 may control the steering unit 132 by using an input from the control system 106, to avoid an obstacle detected by the sensor system 104 and the obstacle avoidance system 144. In some embodiments, the computer system 112 may be operated to provide control for many aspects of the in-vehicle terminal 100 and the subsystems thereof.

Optionally, one or more of the foregoing components may be mounted separately from the in-vehicle terminal 100 or associated with the in-vehicle terminal 100. For example, the data storage apparatus 114 may be partially or totally separated from the in-vehicle terminal 100. The foregoing components may be communicatively coupled together in a wired and/or wireless manner.

Optionally, the foregoing component is merely an example. In actual application, components in the foregoing modules may be added or deleted based on an actual requirement. FIG. 1 should not be understood as a limitation on this embodiment of this application.

Optionally, a computing device (for example, the computer system 112, the computer vision system 140, and the data storage apparatus 114 in FIG. 1) associated with the in-vehicle terminal 100 may predict behavior of a recognized obstacle based on a characteristic of the recognized obstacle and a status (for example, traffic, rain, and ice on a road) of the ambient environment. Optionally, recognized obstacles depend on behavior of each other. Therefore, all the recognized obstacles may be considered together to predict behavior of a single recognized obstacle. The in-vehicle terminal 100 can adjust a speed of the vehicle based on the predicted behavior of the obstacle. In other words, the automated driving vehicle can determine, based on the predicted behavior of the obstacle, a specific state to which the vehicle needs to be adjusted (for example, accelerate, decelerate, or stop). In the process, another factor may be considered to determine the speed of the vehicle, for example, a lateral location of the vehicle on a driving road, a curvature of the road, and proximity between the vehicle and each of static and dynamic objects.

The vehicle may be a car, a truck, a motorcycle, a bus, a boat, an airplane, a helicopter, a lawn mower, a recreational vehicle, a playground vehicle, a construction device, a trolley, a golf cart, a train, a handcart, and the like. This is not specially limited in this embodiment of the present invention.

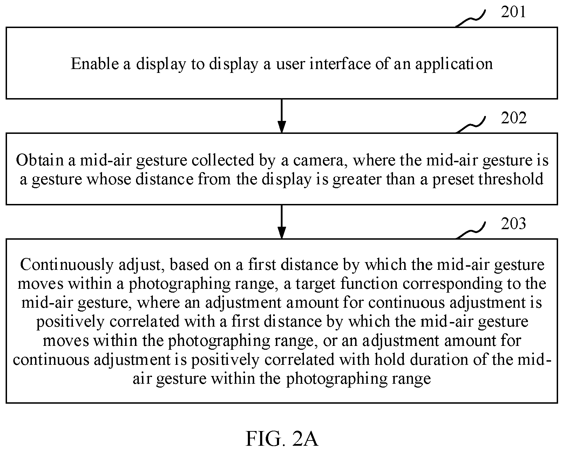

The following uses an example in which the terminal device is the in-vehicle terminal shown in FIG. 1 to describe in detail the control method based on a mid-air gesture in the embodiments of this application. For example, references may be made to FIG. 2A.

FIG. 2A is a flowchart of a control method based on a mid-air gesture according to an embodiment of this application. This embodiment includes the following steps.

201. Enable a display to display a user interface of an application.

For example, the application may be a system application or a third-party application installed on a terminal device. The terminal device recognizes an operation instruction input by the user by tapping the display or the like, to enable the display to display the user interface of the application.

202. Obtain a mid-air gesture collected by a camera, where the mid-air gesture is a gesture whose distance from the display is greater than a preset threshold.

The mid-air gesture is a gesture whose distance from the display is greater than the preset threshold.

In this embodiment of this application, the mid-air gesture may also be referred to as a 3D gesture, a three-dimensional gesture, a contactless gesture, or the like. A gesture set is stored in a local database or a remote database of the terminal device, and the gesture set stores a mid-air gesture, a function corresponding to the mid-air gesture, and a correspondence between a mid-air gesture and a function. After the user makes a mid-air gesture within a photographing range of the camera, for example, after a user in a front-passenger seat makes a mid-air gesture in front of the camera, the camera collects the mid-air gesture, and the terminal device obtains the mid-air gesture collected by the camera and determines whether the mid-air gesture exists in the gesture set. If the mid-air gesture exists in the gesture set, the terminal device determines a target function corresponding to the mid-air gesture. If the mid-air gesture does not exist in the gesture set, the terminal device considers that the gesture cannot be recognized.

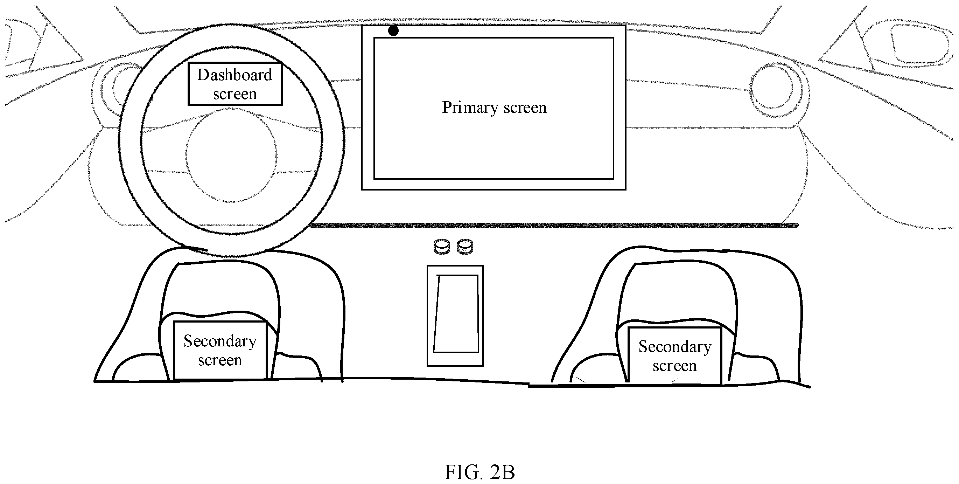

Locations of the display, the camera, and the terminal device are not limited in this embodiment of this application. For example, the terminal device is an in-vehicle terminal device, and the camera, the display, and the like are disposed on the in-vehicle terminal device. In this case, the display, the camera, and the terminal device are integrated together. For another example, the terminal device is an in-vehicle terminal device, and the camera and the display are not integrated into the in-vehicle terminal. FIG. 2B is a schematic diagram of a vehicle cockpit in which a control apparatus based on a mid-air gesture according to an embodiment of this application is disposed. Referring to FIG. 2B, the control apparatus based on a mid-air gesture is integrated into the in-vehicle terminal, and the display may be a center console display screen (a primary screen) on the vehicle, or may be a screen (a secondary screen) disposed on the back of a vehicle seat, or the like. The camera may be a camera of an MDS or a CMS of the vehicle, and is not shown in the figure. The in-vehicle terminal is connected to the camera, the primary screen, and the secondary screen through Wi-Fi and the like.

203. Continuously adjust, based on a first distance by which the mid-air gesture moves within the photographing range of the camera, a target function corresponding to the mid-air gesture, where an adjustment amount for continuous adjustment is positively correlated with the first distance by which the mid-air gesture moves within the photographing range, or an adjustment amount for continuous adjustment is positively correlated with hold duration of the mid-air gesture within the photographing range.

For example, starting from a moment at which the mid-air gesture is recognized to a moment at which the mid-air gesture moves out of the photographing range, the terminal device continuously adjusts the target function corresponding to the mid-air gesture, that is, continuously adjusts the target function in a process in which the mid-air gesture is held within the photographing range. For example, the adjustment amount for continuous adjustment is positively correlated with the hold duration of the mid-air gesture within the photographing range. For example, if the target function corresponding to the mid-air gesture is to increase a volume, the volume is adjusted by 10% per second. For another example, the adjustment amount for continuous adjustment is positively correlated with the first distance. For example, if the target function corresponding to the mid-air gesture is fast-forward, a video is fast-forwarded by 10 minutes each time the mid-air gesture moves by 3 centimeters within the photographing range.

In the control method based on a mid-air gesture provided in this embodiment of this application, after the user makes the mid-air gesture within the photographing range of the camera, the camera collects the mid-air gesture; and after recognizing the target function corresponding to the mid-air gesture, the terminal device continuously adjusts, based on the hold duration, the movement distance, or the like of the mid-air gesture within the photographing range, the target function corresponding to the mid-air gesture, so that the target function gradually changes to continuously adjust the target function. In this way, the user determines, in a timely manner, whether adjustment needs to be terminated, to avoid repeated adjustment caused because the user cannot complete adjustment at one time, so that an operation is simple. In addition, duration in which the user gazes at a screen when the user adjusts the target function is reduced, and driving safety is improved. Moreover, for a user in a front-passenger seat or a rear seat, the target function can be accurately adjusted by remotely inputting the mid-air gesture, and the target function can be adjusted without performing touch through getting up and the like, to greatly improve convenience and user experience.

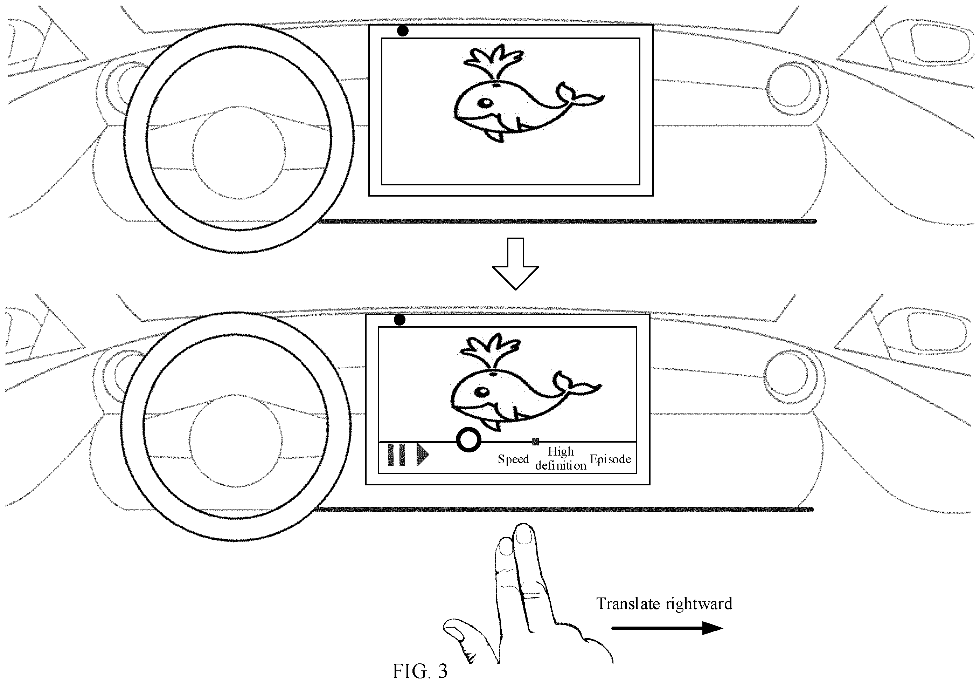

Optionally, to prompt the user with information that the terminal device has recognized the mid-air gesture and has waked up a function of the mid-air gesture, the display displays a function origin. The function origin is used to indicate that the terminal device has recognized the mid-air gesture and has waked up the function of the mid-air gesture. For example, references may be made to FIG. 3.

FIG. 3 is a schematic diagram of a function origin in a control method based on a mid-air gesture according to an embodiment of this application. Referring to FIG. 3, a camera is disposed in an upper left corner of an in-vehicle terminal, and is shown by a black circle in the figure. Initially, the in-vehicle terminal plays a video. When the user makes, within a photographing range of the camera, a mid-air gesture that two fingers are translated rightward, if in-vehicle terminal recognizes that a function of the mid-air gesture is to adjust a video progress, the in-vehicle terminal pops up a progress bar and a current play progress, and displays a function origin on the progress bar, where the function origin is shown by a black circle in the figure. Therefore, the user learns that the terminal device has recognized the mid-air gesture and has waked up the function of the mid-air gesture.

It should be noted that, in FIG. 3, an example in which the camera is disposed in the upper left corner of the in-vehicle terminal is used to describe this embodiment of this application in detail. However, no limitation is imposed in this embodiment of this application. In another optional implementation, a manufacturer of the in-vehicle terminal may flexibly dispose a location of the camera.

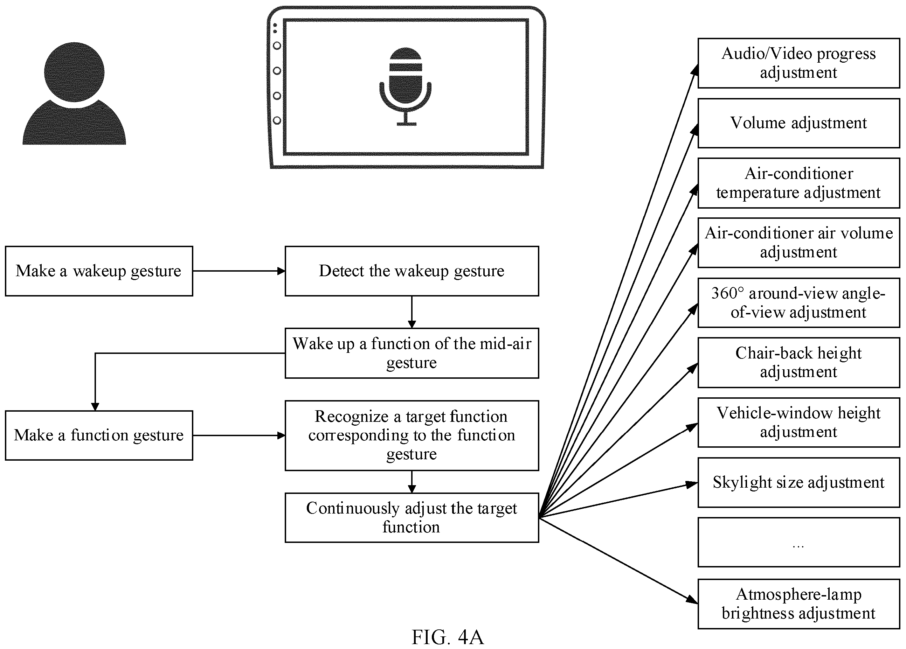

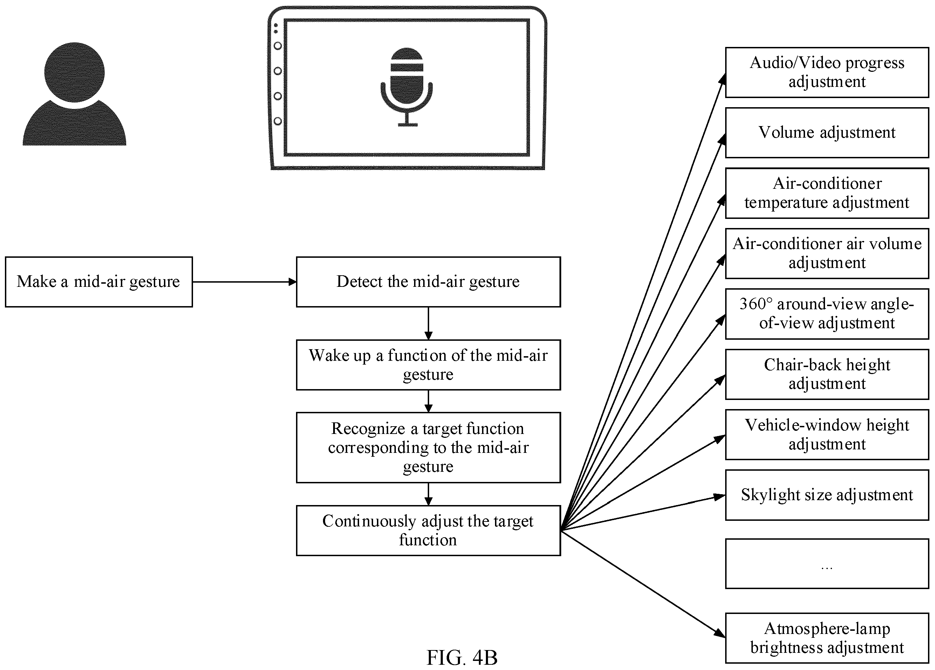

In the foregoing embodiment, the mid-air gesture may be both a wakeup gesture and a function gesture, the wakeup gesture is used to wake up the function of the mid-air gesture, and the function gesture is used to adjust the target function. Alternatively, the wakeup gesture and the function gesture are different mid-air gestures. For example, references may be made to FIG. 4A and FIG. 4B.

FIG. 4A is a schematic diagram of a process of a control method based on a mid-air gesture according to an embodiment of this application. Referring to FIG. 4A, when a wakeup gesture and a function gesture are different mid-air gestures, after recognizing the wakeup gesture, a terminal device wakes up a function of a mid-air gesture, where the function of the mid-air gesture is that the terminal device responds to the function gesture made by a user, and adjusts a target function based on hold duration, a movement distance, or the like of the function gesture. A manner of performing adjustment based on the hold duration may also be referred to as a time-based adjustment manner, and a manner of performing adjustment based on the movement distance may also be referred to as a space-based adjustment manner.

After waking up the function of the mid-air gesture, the terminal device prompts the user, through voice, animation, and the like, with information that the function of the mid-air gesture has been waked up, and the user needs to make the function gesture. Then, the user makes the function gesture, and the terminal device recognizes the target function corresponding to the function gesture, and adjusts the target function based on the hold duration, the movement distance, or the like of the function gesture within a photographing range. The target function may be any one of volume adjustment, audio/video progress adjustment, air-conditioner temperature adjustment, chair-back height adjustment, 360° around-view angle-of-view adjustment, vehicle-window height adjustment, skylight size adjustment, air-conditioner air volume adjustment, and atmosphere-lamp brightness adjustment. In this solution, the terminal device flexibly adjusts any function that can be continuously adjusted.

In addition, a body of the user in an environment of an intelligent cockpit may shake due to braking, road bump, and the like, and the photographing range of a camera in the intelligent cockpit may be large. Therefore, to prevent the terminal device from mistakenly determining, based on an action of the user such as taking a water cup in front of a center console screen and a paper towel in front of a windshield, that the user expects to make a mid-air gesture, in the embodiment in FIG. 4A, a wakeup gesture specially used to wake up the function of the mid-air gesture is set, for example, a mid-air gesture that five fingers are vertically upward. If the terminal device detects that the user makes the mid-air gesture that five fingers are vertically upward, and hold duration of the mid-air gesture exceeds preset duration, for example, 3 seconds, the terminal device considers that the user expects to wake up a function of the mid-air gesture. In this case, the terminal device enables the function of the mid-air gesture, and recognizes a mid-air gesture collected by the camera.

FIG. 4B is a schematic diagram of another process of a control method based on a mid-air gesture according to an embodiment of this application. Referring to FIG. 4B, when a mid-air gesture is both a wakeup gesture and a function gesture, after recognizing the mid-air gesture, the terminal device wakes up a function of the mid-air gesture, determines a target function, and adjusts the target function based on hold duration, a movement distance, or the like of the mid-air gesture.

In the foregoing embodiment, the target function corresponding to the mid-air gesture is a function that is of an application currently displayed on the screen and that can be continuously adjusted, and functions that are of different applications and that can be continuously adjusted correspond to a same mid-air gesture.

When there are many functions that can be continuously adjusted by the terminal device, if different mid-air gestures are set for different functions that can be continuously adjusted, a quantity of mid-air gestures is particularly large.

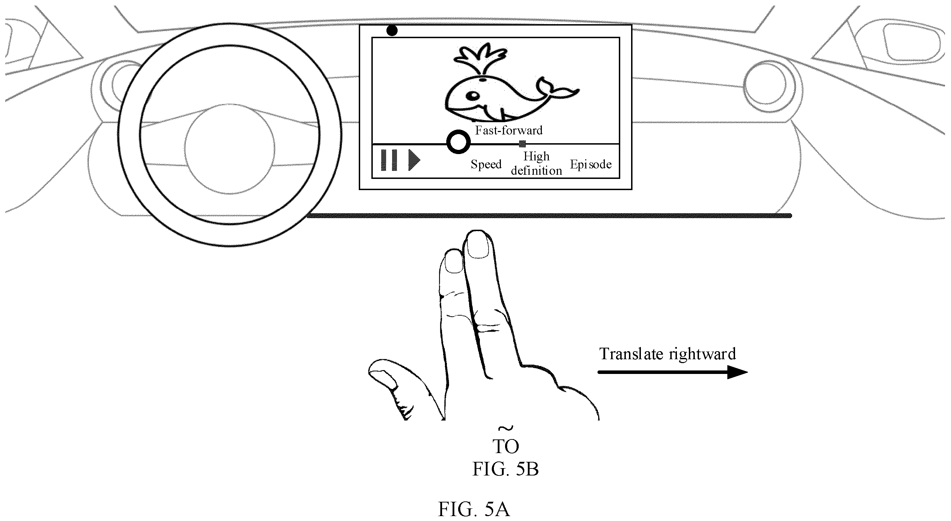

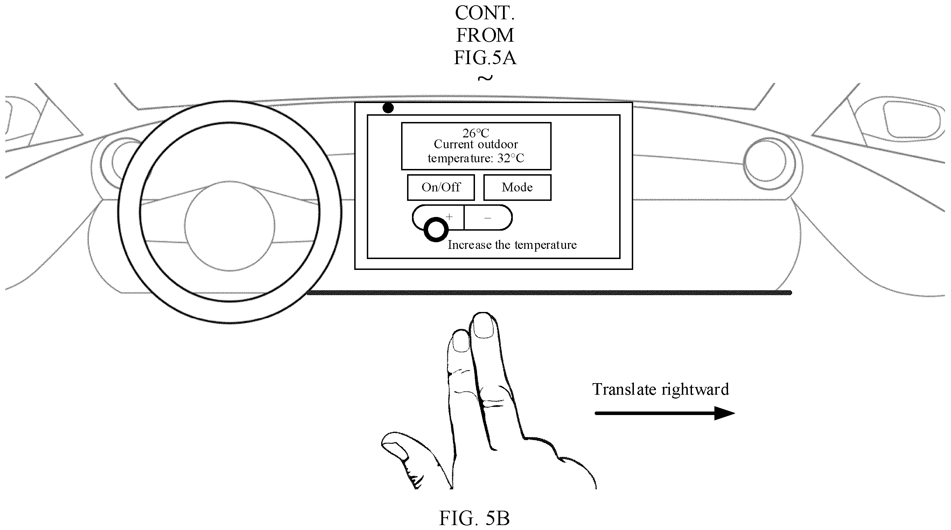

Consequently, the user is confused with various gestures. Therefore, a same mid-air gesture may be set for functions that are of different applications and that can be continuously adjusted. For example, references may be made to FIG. 5A and FIG. 5B.

FIG. 5A and FIG. 5B are a schematic diagram of a display screen and a mid-air gesture in a control method based on a mid-air gesture according to an embodiment of this application. Referring to FIG. 5A and FIG. 5B, for a mid-air gesture that two fingers move rightward, when an in-vehicle terminal displays a video play interface, a target function corresponding to the mid-air gesture is fast-forward, and a floating window beside a function origin displays "fast-forward", so that a user learns of the target function corresponding to the mid-air gesture. When an in-vehicle terminal displays an air conditioner interface, a target function corresponding to the mid-air gesture is to increase a temperature, and a floating window beside a function origin displays "increase a temperature", so that a user learns of the target function corresponding to the mid-air gesture. In this solution, a same mid-air gesture is set for different applications, to avoid a problem that the user cannot distinguish between mid-air gestures due to an excessively large quantity of mid-air gestures, so as to reduce learning costs of the user. A same mid-air gesture is used for similar functions to meet human-computer interaction logic.

In the foregoing embodiment, the target function corresponding to the mid-air gesture is a function that is of an application currently displayed on the screen and that can be continuously adjusted, and different functions that are of a same application and that can be continuously adjusted correspond to different mid-air gestures.

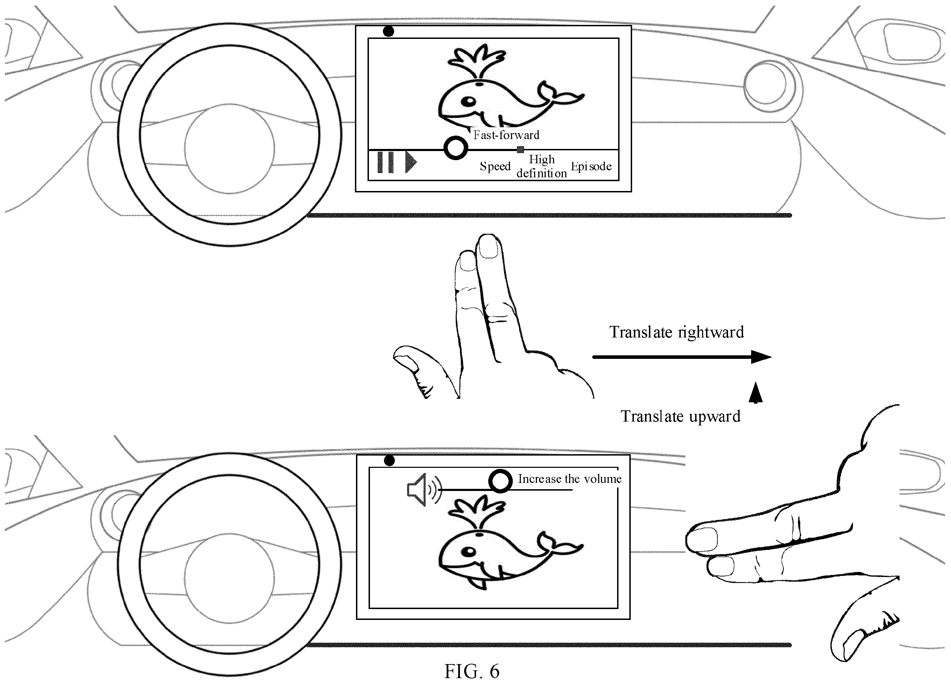

A same application has many functions that can be continuously adjusted by the terminal device. For example, functions that are of a video play application and that can be continuously adjusted includes a volume, a progress, and the like, and functions that are of an air conditioner and that can be continuously adjusted include a temperature, an air volume, and the like. To facilitate adjustment of different functions that are of a same application and that can be continuously adjusted, different mid-air gestures may be set for different functions that are of a same application and that can be continuously adjusted. For example, references may be made to FIG. 6.

FIG. 6 is a schematic diagram of a display screen and a mid-air gesture in a control method based on a mid-air gesture according to an embodiment of this application. Referring to FIG. 6, when an in-vehicle terminal displays a video play interface, a target function corresponding to a mid-air gesture that two fingers move rightward is fast-forward, and a floating window beside a function origin displays "fast-forward", so that a user learns of the target function corresponding to the mid-air gesture. When the in-vehicle terminal displays the video play interface, a target function corresponding to a mid-air gesture that two fingers move upward is to increase a volume, and a floating window beside the function origin displays "increase a volume", so that the user learns of the target function corresponding to the mid-air gesture. In this solution, different mid-air gestures are set for different functions that are of a same application and that can be continuously adjusted, to conveniently and quickly adjust different functions that are of a same application and that can be continuously adjusted.

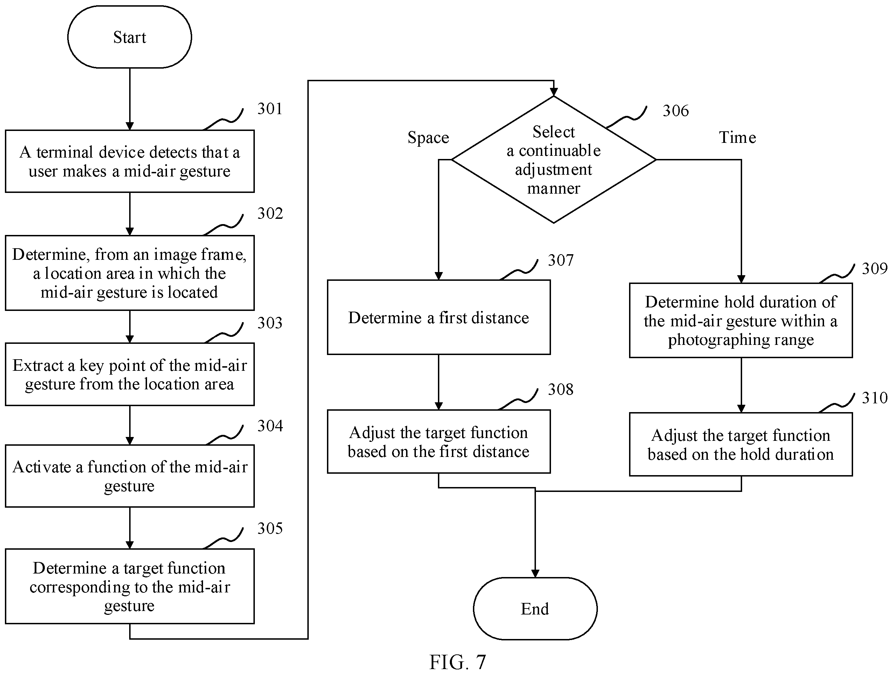

In the foregoing embodiment, after recognizing the target function corresponding to the mid-air gesture, the terminal device may determine the adjustment amount based on the hold duration, the movement distance, or the like of the mid-air gesture within the photographing range, and further adjust the target function based on the adjustment amount. For example, references may be made to FIG. 7.

FIG. 7 is a flowchart of a control method based on a mid-air gesture according to an embodiment of this application. Referring to FIG. 7, this embodiment includes the following steps.

301. A terminal device detects that a user makes a mid-air gesture.

For example, a camera sends a collected video stream within a photographing range to a processor of the terminal device, and the processor analyzes the video stream. If determining that a latest photographed image frame or each of consecutive image frames includes the mid-air gesture, the terminal device considers that the user makes the mid-air gesture.

302. Determine, from the image frame, a location area in which the mid-air gesture is located.

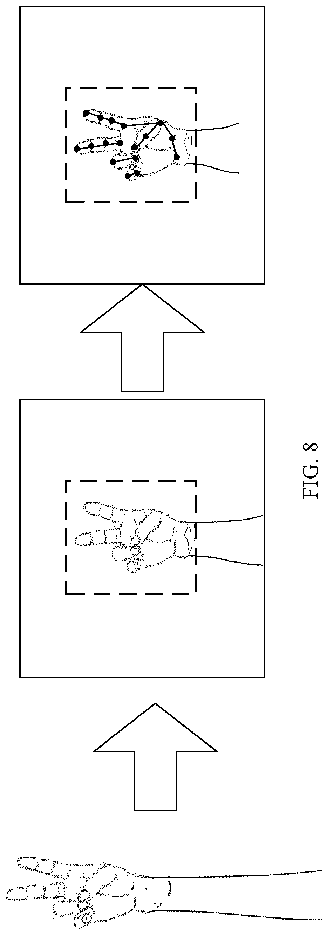

For example, FIG. 8 is a schematic diagram of a mid-air gesture in a control method based on a mid-air gesture according to an embodiment of this application.

Referring to FIG. 8, the user makes, within the photographing range, a gesture that the index finger and the middle finger are raised. After the camera collects the gesture, the terminal device extracts, from a collected image by using a hand object detection technology, a location area in which the mid-air gesture is located, and the location area is shown by a dashed-line box in the figure. The hand object detection technology is, for example, a hand object detection technology based on a deep model such as a single shot multibox detector (Single Shot MultiBox Detector, SSD).

303. Extract a key point of the mid-air gesture from the location area.

Still referring to FIG. 8, after determining the location area, the terminal device inputs, into a hand key point detection model, a picture corresponding to the determined location area in which the mid-air gesture is located, and detects the key point by using the hand key point detection model, where the key point is shown by a black dot in the figure. In this process, the hand key point detection model is a model that is trained by using a hand segmentation technology, a hand key point positioning technology, and the like, for example, an OpenPose (OpenPose) model.

304. Activate a function of the mid-air gesture.

305. Determine a target function corresponding to the mid-air gesture.

For example, the terminal device recognizes the mid-air gesture by using the detected key point, to recognize that the user makes a gesture that a single finger is raised, a double-finger gesture, and the like. Then, the terminal device queries a database and the like to determine whether the mid-air gesture is a mid-air gesture related to an application in a current interface; and if the mid-air gesture is a gesture corresponding to a function of the application in the current interface, the terminal device uses the function as the target function; or if the mid-air gesture is not any function of the application in the current interface, the terminal device does not respond or prompts the user with information that the mid-air gesture is incorrect.

306. Select a continuable adjustment manner; and if a space-based adjustment manner is selected, perform step 307 and step 308; or if a time-based adjustment manner is selected, perform step 309 and step 310.

For example, the space-based adjustment manner is a manner of determining an adjustment amount based on a first distance by which the mid-air gesture moves within the photographing range. In this manner, an adjustment amount for continuous adjustment is positively correlated with the first distance by which the mid-air gesture moves within the photographing range. The time-based adjustment manner is a manner of determining an adjustment amount based on hold duration of the mid-air gesture within the photographing range. In this manner, an adjustment amount for continuous adjustment is positively correlated with the hold duration of the mid-air gesture within the photographing range.

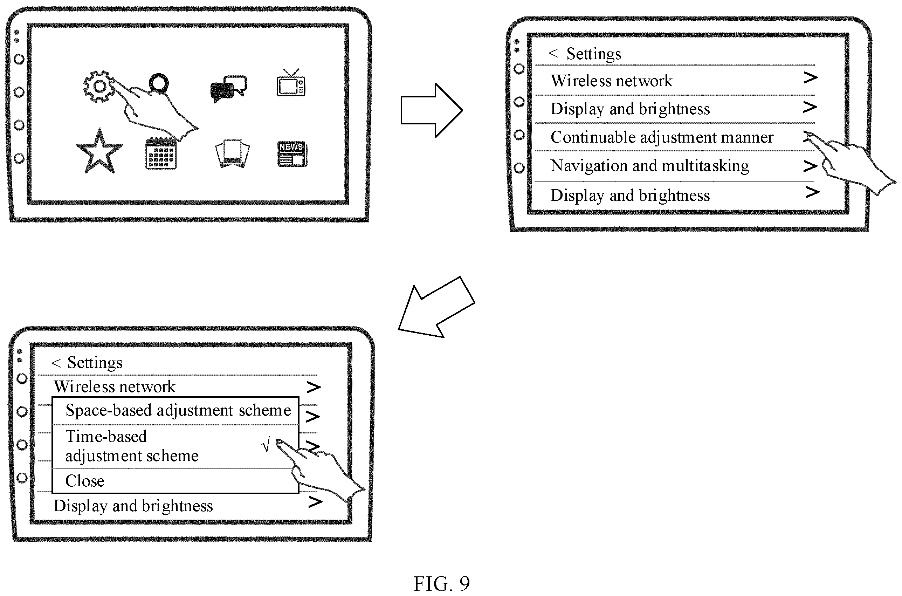

The space-based adjustment manner or the time-based adjustment manner may be set before delivery of the terminal device, or may be opened to be set by the user. For example, references may be made to FIG. 9.

FIG. 9 is a schematic diagram of a process of setting a continuable adjustment manner in a control method based on a mid-air gesture according to an embodiment of this application. Referring to FIG. 9, the user taps a setting icon in an interface of the terminal device to display a setting interface. In the setting interface, the user taps a drop-down menu button of "continuable adjustment manner". A floating window pops up in the interface of the terminal device, so that the user can select "time-based adjustment manner", "space-based adjustment manner", or "close".

307. Determine the first distance.

For example, the terminal device detects a start point and an end point that exist when the mid-air gesture moves, and determines, based on the start point and the end point, the first distance by which the mid-air gesture moves within the photographing range.

308. Adjust the target function based on the first distance.

For example, the terminal device continuously adjusts the target function in a movement process of the mid-air gesture, until the mid-air gesture moves by the first distance.

309. Determine the hold duration of the mid-air gesture within the photographing range.

310. Adjust the target function based on the hold duration.

For example, the terminal device continuously adjusts the target function in a movement process of the mid-air gesture, until the mid-air gesture moves out of the photographing range.

The following describes in detail how the terminal device performs continuable adjustment in the space-based adjustment manner and the space-based adjustment manner in the foregoing embodiment.

First, the terminal device performs continuable adjustment in the space-based adjustment manner.

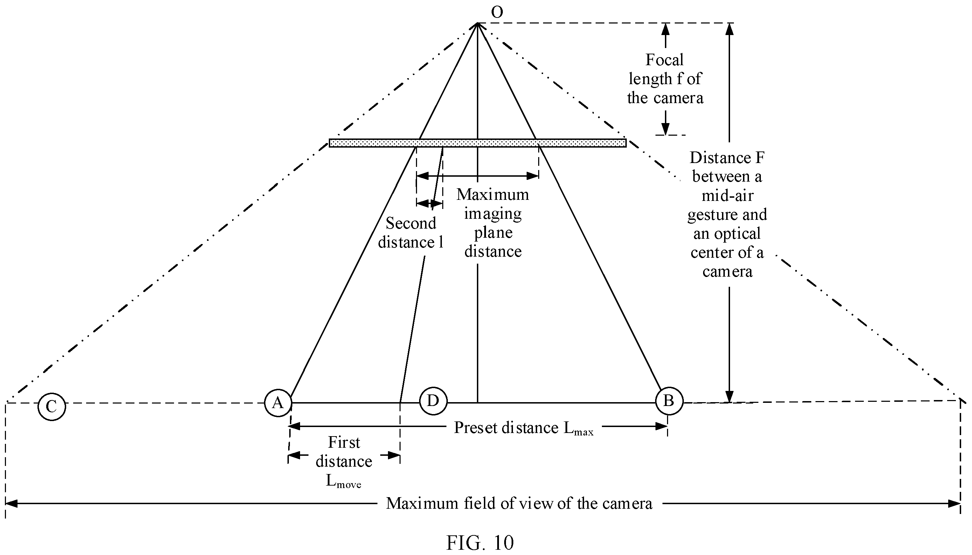

In the space-based adjustment manner, the adjustment amount for continuous adjustment is positively correlated with the first distance by which the mid-air gesture moves within the photographing range of the camera. The first distance is determined based on at least a focal length of the camera, a distance between the mid-air gesture and an optical center of the camera, and a second distance. The second distance is used to indicate a distance by which a mid-air gesture on an imaging plane of the camera moves when the mid-air gesture moves within the photographing range of the camera. For example, references may be made to FIG. 10.

FIG. 10 is a schematic diagram of a process of determining a first distance in a control method based on a mid-air gesture according to an embodiment of this application. Referring to FIG. 10, a dot-filled part is the imaging plane of the camera, a plane on which a straight line AB is located is a plane parallel to the imaging plane, a point O is the optical center of the camera, the base of a dash-dot-dot triangle represents a maximum field of view of the camera, and a preset distance $L_{max}$ is located in the field of view. The first distance $L_{move}$ is a distance by which the mid-air gesture of the user moves within the photographing range, and the first distance $L_{move}$ cannot exceed the preset distance $L_{max}$. The preset distance $L_{max}$ may be a fixed value, or may be a value related to arm length and the like of the user. The focal length f of the camera is related to a model, a type, and the like of the camera. The preset distance $L_{max}$ corresponds to a maximum imaging plane distance. In other words, when the mid-air gesture of the user moves by the preset distance $L_{max}$, the mid-air gesture on the imaging plane of the camera moves by the maximum imaging plane distance.

The second distance l represents the distance by which the mid-air gesture on the imaging plane of the camera moves when the mid-air gesture moves within the photographing range of the camera. For the terminal device, in these parameters, the focal length f of the camera is known, the distance F between the mid-air gesture and the optical center of the camera may be obtained through measurement, the second distance l may be obtained by tracing the mid-air gesture, and the first distance $L_{move}$ is a value to be solved. After the first distance $L_{move}$ is solved, the terminal device may determine the adjustment amount based on the first distance $L_{move}$.

It should be noted that, in FIG. 10, an example in which the line segment AB represents the preset distance $L_{max}$ is used to describe this embodiment of this application in detail, that is, an example in which the mid-air gesture moves from a point A to a point B is used. However, no limitation is imposed in this embodiment of this application. In another feasible implementation, the mid-air gesture may move from a point C to a point D, that is, a line segment CD represents the preset distance $L_{max}$.

The following describes in detail how the terminal device obtains the distance F between the mid-air gesture and the optical center of the camera and the second distance l, how the terminal device calculates the first distance $L_{move}$, and how the terminal device determines, based on the first distance $L_{move}$, to perform continuous adjustment.

First, a process of obtaining the distance F between the mid-air gesture and the optical center of the camera is described.

For example, a sensor of the terminal device determines the distance F between the mid-air gesture and the optical center of the camera. The sensor may be disposed separately, or may be integrated into the camera. The following uses an example in which the sensor is integrated into the camera to describe in detail how the terminal device obtains the distance F between the mid-air gesture and the optical center of the camera.

When the camera is a monocular camera, the terminal device first performs object recognition through image matching, to recognize the mid-air gesture. Then, the terminal device estimates the distance F between the mid-air gesture and the optical center of the camera based on a size of the mid-air gesture in an image. To estimate the distance F, the terminal device needs to accurately recognize the mid-air gesture. Accurate recognition is the first step of estimating the distance. To accurately recognize the mid-air gesture, a sample feature database needs to be established locally or remotely on the terminal, and needs to be continuously maintained, to ensure that the sample feature database includes all mid-air gestures.

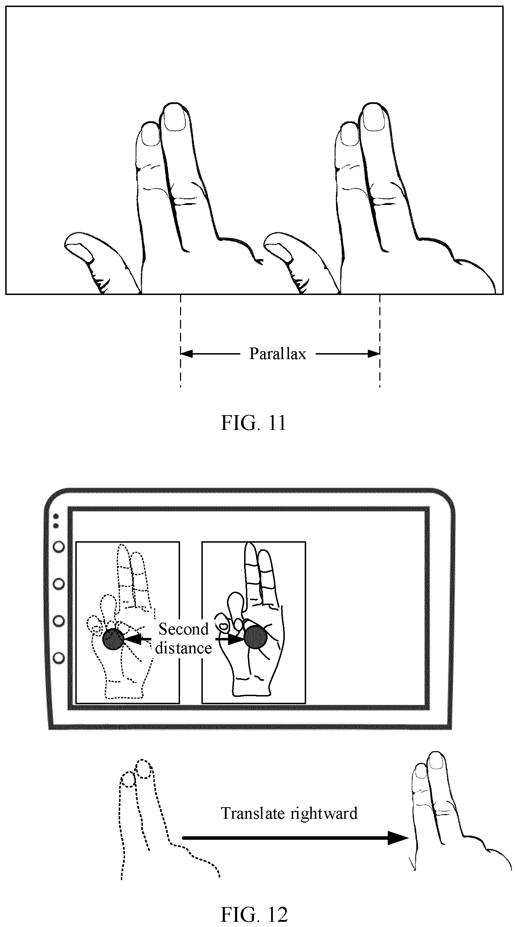

When the camera is a binocular camera, the terminal device performs photographing within the photographing range by using the binocular camera to obtain two images, and determines, by using the two images, parallax corresponding to the mid-air gesture. A larger distance between the mid-air gesture and the camera indicates smaller parallax. On the contrary, a smaller distance between the mid-air gesture and the camera indicates larger parallax. Then, the terminal device may determine the distance F between the mid-air gesture and the optical center of the camera based on a preset correspondence between parallax and a distance. For example, references may be made to FIG. 11.

FIG. 11 is a schematic diagram of a process of determining F in a control method based on a mid-air gesture according to an embodiment of this application. Referring to FIG. 11, similar to the human eye, mid-air gestures in two images photographed by a binocular camera are not located at a same location. Therefore, when the two images overlap, the mid-air gestures do not overlap, and a distance between the two mid-air gestures is referred to as parallax. After obtaining the parallax, the terminal device may determine the distance F based on the parallax.

When the camera is a TOF lens, the terminal device first continuously sends an optical pulse to the mid-air gesture, then receives, by using the sensor, light returned by the mid-air gesture, and determines the distance F by detecting time of flight of the optical pulse. The time of flight of the optical pulse is round trip time of the optical pulse.

It should be noted that, when the mid-air gesture is located at any location on the plane on which AB is located in FIG. 10, the distance F between the mid-air gesture and the optical center of the camera is the same.

Second, a process of obtaining the second distance l is described.

For example, the second distance l may be obtained through image processing. In the process of obtaining the second distance l, when the mid-air gesture of the user moves within the photographing range, the mid-air gesture imaged on the imaging plane of the camera also moves. The terminal device obtains a hand location area by using a deep learning technology. In a movement process, the terminal device determines a first location and a second location of the mid-air gesture on the imaging plane of the camera in a movement process, and determines the second distance l based on a quantity of pixels between the first location and the second location and a size of the pixel. For example, references may be made to FIG. 12.

FIG. 12 is a schematic diagram of a process of determining a second distance in a control method based on a mid-air gesture according to an embodiment of this application. Referring to FIG. 12, the user makes, within the photographing range of the camera, a mid-air gesture that two fingers move rightward. In a movement process, a mid-air gesture imaged on the imaging plane also moves. The terminal device determines a location area in which the mid-air gesture on the imaging plane is located, and tracks the location area. In the figure, a dotted line shows the first location, and a solid line shows the second location. The terminal device determines a quantity of pixels between a center (shown by a gray-filled circle in the figure) of a location area corresponding to the first location and a center of a location area corresponding to the second location, and may determine the second distance l based on the quantity of pixels and a size of the pixel.

In this solution, the hand location area is continuously traced, so that the second distance l can be determined based on the location area.

Third, the first distance $L_{move}$ is determined.

After determining the distance F and the second distance l, the terminal device may determine the first distance

$L_{move}$ according to the following formula:

$$\frac{l}{L_{move}} = \frac{f}{F}$$

In this formula, f represents the focal length of the camera, F represents the distance between the mid-air gesture and the optical center of the camera, and l represents the second distance.

In this embodiment of this application, to determine the first distance $L_{move}$, a preset model may be pre-trained, the focal length f of the camera, the distance F between the mid-air gesture and the optical center of the camera, and the second distance l are input into the pre-trained preset model, and the first distance $L_{move}$ is determined by using the preset model.

In a process of training the preset model, a sample data set is obtained, where the sample data set includes a plurality of groups of sample data, and one group of sample data includes a focal length of a sample camera, a distance between a sample mid-air gesture and an optical center of the sample camera, and a sample second distance; and the preset model is trained by using the plurality of groups of sample data in the sample data set. The training process may be executed by the terminal device, or may be executed by a cluster server. This is not limited in this embodiment of this application.

Fourth, a process of determining, based on the first distance $L_{move}$, to perform adjustment process is described.

The terminal device may continuously adjust, based on the first distance $L_{move}$ and the adjustment amount per unit of distance, the target function corresponding to the mid-air gesture.

For example, the adjustment amount per unit of distance may be preset on the terminal device, and the adjustment amount per unit of distance represents an adjustment amount of the target function per unit of distance by which the mid-air gesture moves. For example, the unit of distance may be 1 centimeter, 1 decimeter, or the like. This is not limited in this embodiment of this application. In this manner, the preset distance $L_{max}$ does not need to be set. In other words, a length by which the mid-air gesture moves within the photographing range does not need to be considered.

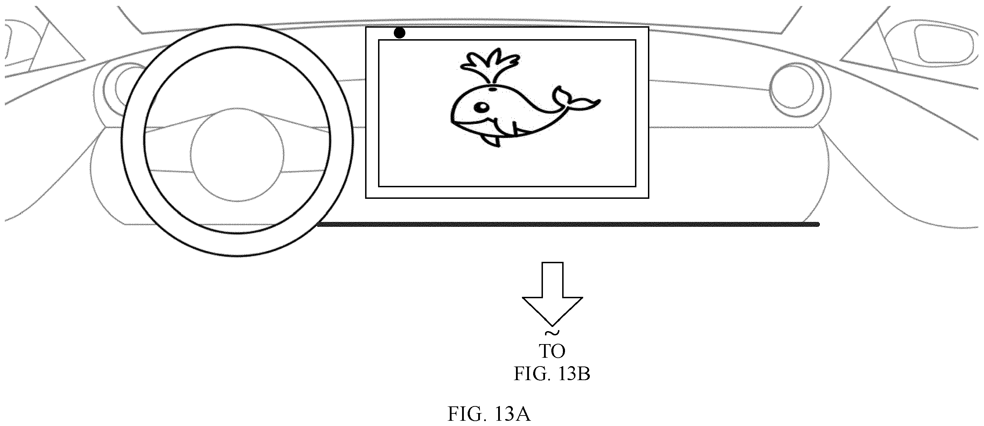

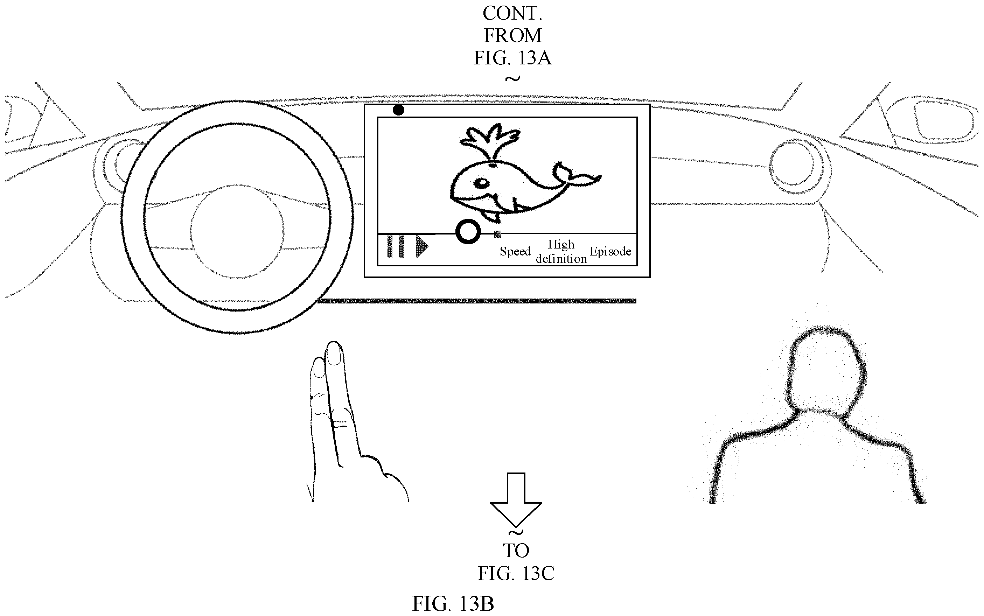

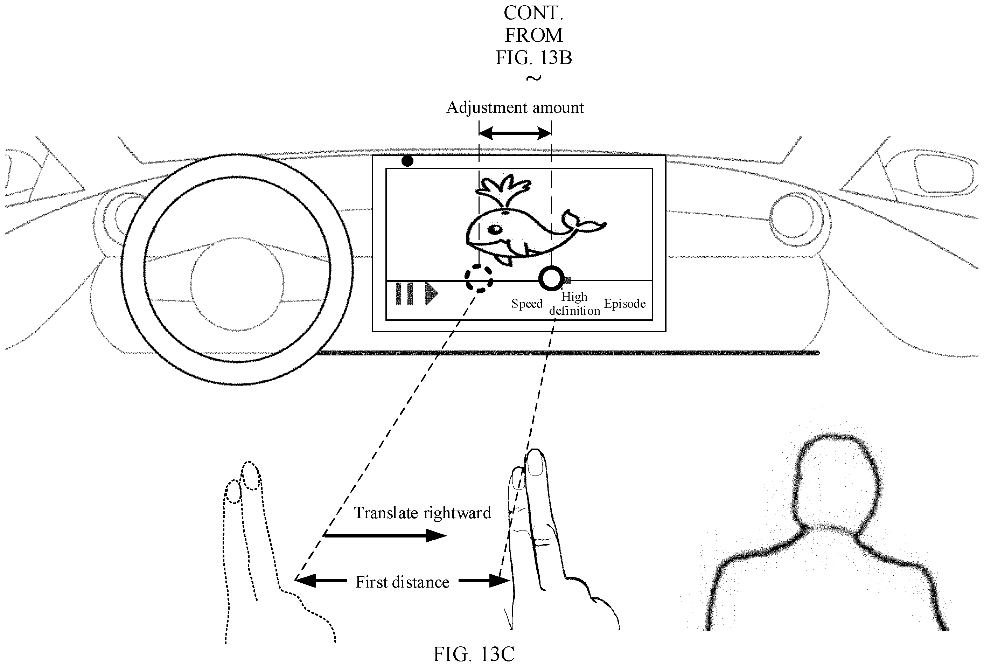

For another example, the preset distance $L_{max}$ may be preset on the terminal device, and the adjustment amount per unit of distance is determined based on the preset distance $L_{max}$ and a total adjustment amount of the target function. The adjustment amount per unit of distance is a ratio of the total adjustment amount of the target function to the preset distance. It is assumed that the target function is fast-forward, duration of a video is 90 minutes, that is, the total adjustment amount is 90 minutes, and the preset distance $L_{max}$ is 30 centimeters. In this case, the adjustment amount per unit of distance is 90/30=3. In other words, each time the mid-air gesture moves by 1 centimeter, the video is fast-forwarded by 3 minutes. It is assumed that the first distance $L_{move}$ is 5 centimeters. In this case, the video is fast-forwarded by 15 minutes in a process in which the mid-air gesture moves by 5 centimeters from an initial location. For the adjustment process, refer to FIG. 13A to FIG. 13C.

FIG. 13A to FIG. 13C are a schematic diagram of a process of adjusting a target function in a control method based on a mid-air gesture according to an embodiment of this application. Referring to FIG. 13A to FIG. 13C, after the terminal device detects the mid-air gesture, a function origin appears on a screen. The terminal device continues to detect the mid-air gesture. When detecting that the mid-air gesture moves, the terminal device determines a movement direction and the first distance, determines the target function of the mid-air gesture based on the movement direction, and further adjusts the target function based on the first distance. A part between a dashed-line function origin and a solid-line function origin in the figure is a final adjustment amount.

It may be learned from the foregoing descriptions that the total adjustment amount is actually the ratio of the first distance $L_{move}$ to the preset distance $L_{max}$, that is, the total adjustment amount is a ratio, a proportion, or a percentage of the first distance $L_{move}$ to the preset distance $L_{max}$.

When the adjustment amount per unit of distance is determined based on the preset distance $L_{max}$ and the total adjustment amount, the preset distance $L_{max}$ may be a fixed value. In this case, the fixed value represents a comfortable distance when the user moves the arm. Specifically, the fixed value may be obtained by collecting statistics about distances by which arms of users of different ages, different genders, and different heights move when the users wave the arms. The fixed value may be an average value of distances by which arms of most users move when the most users wave the arms. Alternatively, the preset distance $L_{max}$ may be a value that is positively correlated with the arm length of the arm of the user.

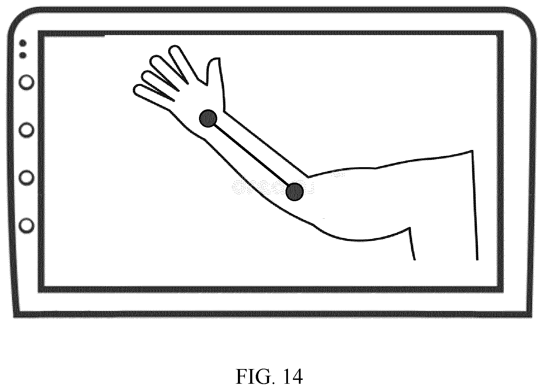

When the preset distance $L_{max}$ is positively correlated with the arm length, after detecting the mid-air gesture, the terminal device recognizes a wrist bone point and an elbow bone point of the user, determines the arm length of the user based on the wrist bone point and the elbow bone point, and determines the preset distance based on the arm length. For example, references may be made to FIG. 14.

FIG. 14 is a schematic diagram of a process of detecting an arm length in a control method based on a mid-air gesture according to an embodiment of this application. Referring to FIG. 14, after the user makes the mid-air gesture, the terminal device detects the wrist bone point and the elbow bone point of the user through deep learning and the like. The two bone points are shown by a black-filled dot in the figure. Then, the terminal device determines three-dimensional coordinates of the wrist bone point and three-dimensional coordinates of the elbow bone point by using a three-dimensional visual system, and determines a distance between the wrist bone point and the elbow bone point based on the two three-dimensional coordinates, so that the arm length (namely, an arm length of an upper arm) of the user can be determined. The three-dimensional visual system may be a binocular camera, a multiocular camera, a TOF camera, or the like. After the arm length is determined, the preset distance $L_{max}$ corresponding to the arm length may be determined by searching a database. The database is a database in which a mapping relationship between an arm length and a preset distance $L_{max}$ corresponding to the arm length is stored. For example, references may be made to Table 1.

**Table 1**

| Arm length (centimeter) | Preset distance $L_{max}$ (centimeter) |
|---|---|
| 35 | 27 |
| 36 | 27.5 |
| 37 | 28 |
| 38 | 28.5 |
| 39 | 29 |
| 40 | 30 |
| 41 | 30.5 |
| 42 | 31 |
| 43 | 32 |
| 44 | 33 |

Table 1 shows a mapping relationship between some arm lengths and preset distances $L_{max}$. It may be learned from Table 1 that preset distances $L_{max}$ corresponding to different arm lengths may be different.

Second, the terminal device performs continuable adjustment in the time-based adjustment manner.

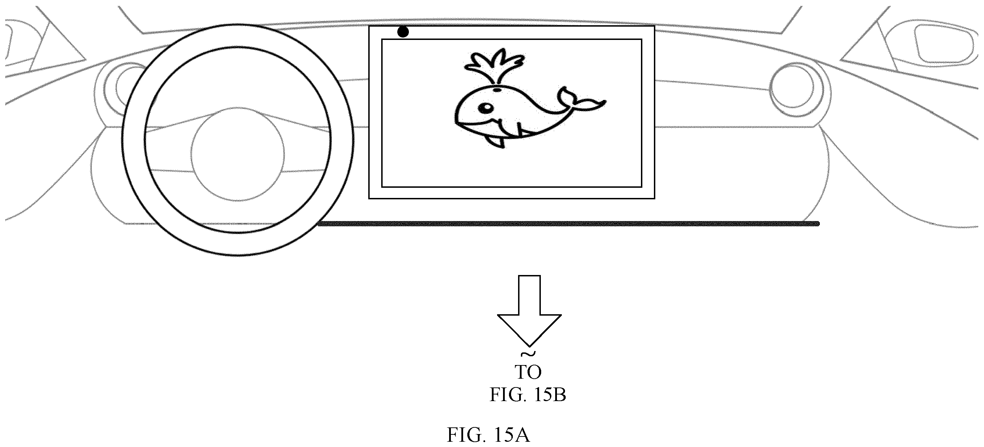

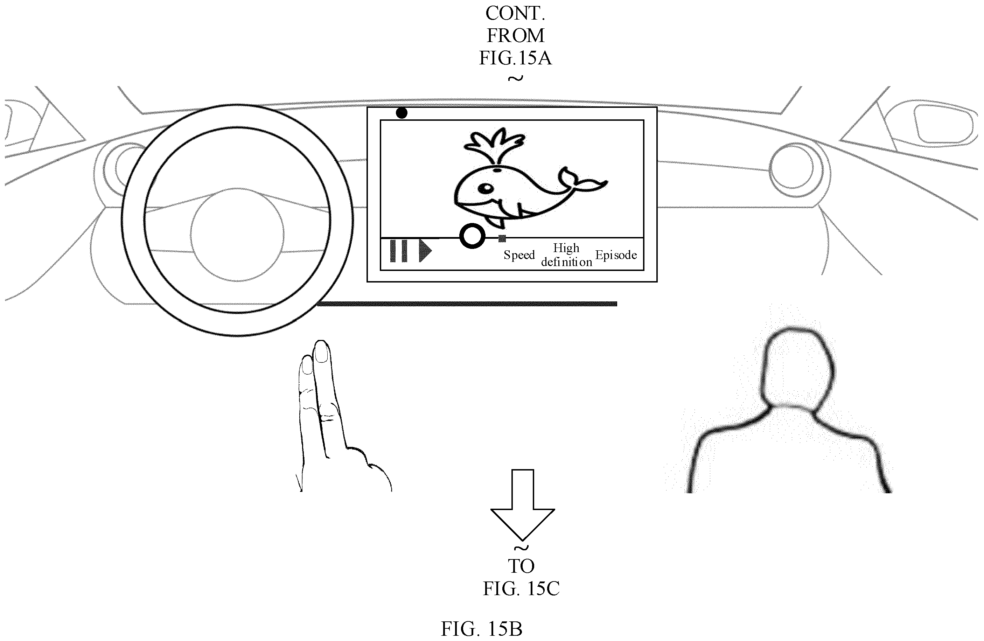

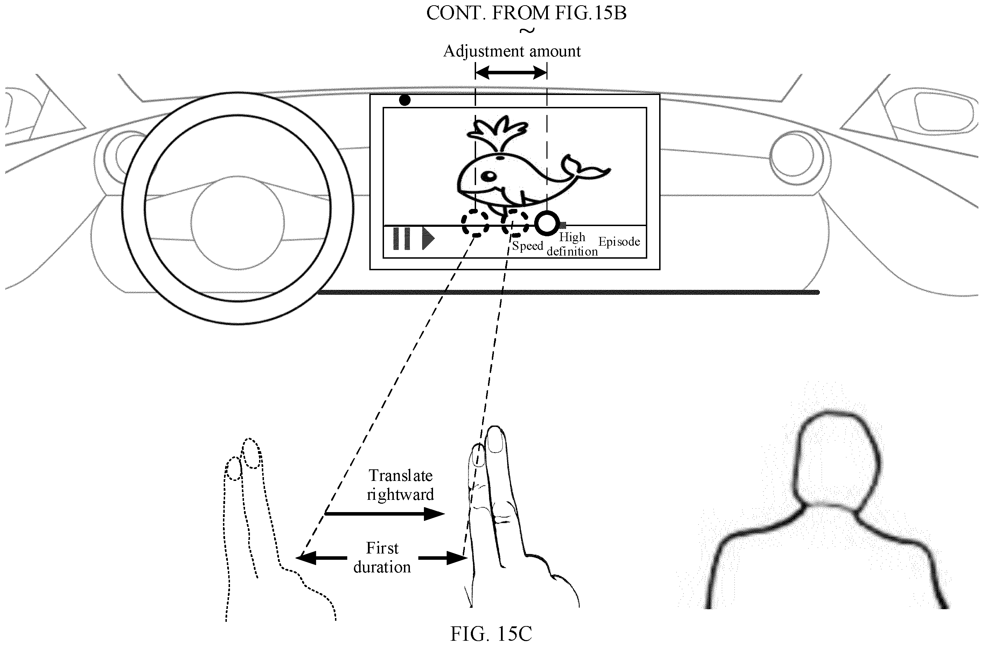

In the time-based adjustment manner, the adjustment amount for continuous adjustment is positively correlated with the hold duration of the mid-air gesture within the photographing range. The user may continuously move the mid-air gesture in the hold duration, or may move the mid-air gesture for a time period, and then the mid-air gesture is still but is held within the photographing range. In other words, the hold duration includes first duration and second duration. In a first time period corresponding to the first duration, the mid-air gesture is continuously translated. In a second time period corresponding to the second duration, the mid-air gesture is still. The first time period is earlier than the second time period. For example, references may be made to FIG. 15A to FIG. 15C.

FIG. 15A to FIG. 15C are a schematic diagram of a process of adjusting a target function in a control method based on a mid-air gesture according to an embodiment of this application. Referring to FIG. 15A to FIG. 15C, after the terminal device detects the mid-air gesture, a function origin appears on a screen. The terminal device continues to detect the mid-air gesture. When detecting that the mid-air gesture moves, the terminal device determines a movement direction, and determines the target function of the mid-air gesture based on the movement direction. Then, the terminal device continuously adjusts the target function based on the hold duration of the mid-air gesture. In the first duration, the mid-air gesture is continuously translated rightward, and an adjustment amount in the duration is shown by a distance between two dashed-line function origins in the figure. After the first duration expires, if the user considers that adjustment needs to further be performed, the user continues to hold the mid-air gesture. The mid-air gesture is no longer translated, but is still, but the target function continues to be adjusted. An adjustment amount in the second duration is shown by a distance between the second dashed-line function origin and a solid-line function origin in the figure. A total adjustment amount is a sum of the adjustment amount in the first duration and the adjustment amount in the second duration. In this process, the camera detects one frame of picture at an interval of preset duration, for example, at an interval of 0.1 second. The terminal device continues to adjust the target function, provided that the picture further includes the mid-air gesture. In other words, regardless of whether the mid-air gesture continues to move or is still, adjustment continues to be performed. In this process, the first duration is at least duration in which the terminal device can recognize the mid-air gesture, and the second duration is duration starting from a time point at which the terminal device recognizes the mid-air gesture to a time point at which the user considers that adjustment is completed and moves the mid-air gesture out of the photographing range. In addition, in the second duration, the mid-air gesture may not always be still, for example, the mid-air gesture continuously moves or intermittently moves.

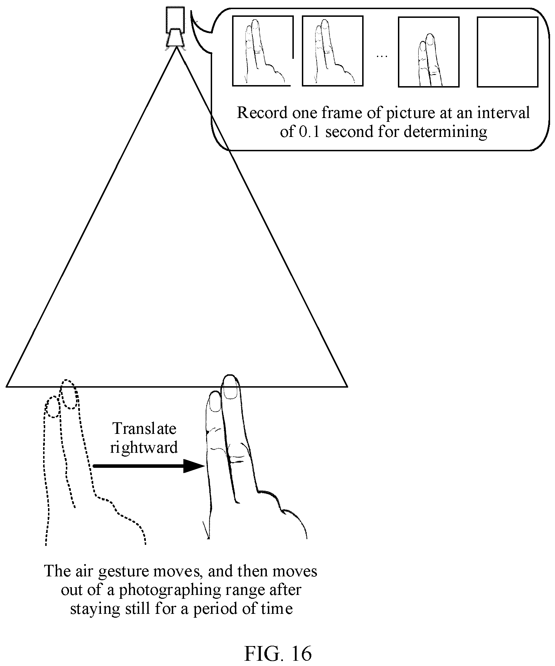

In the adjustment process, the target function is continuously adjusted based on a preset adjustment amount per unit of time. For example, for "increase a volume", if the adjustment amount per unit of time is 10% per second, the volume is increased by 10% each time the mid-air gesture is held by 1 second. For another example, for video fast-ward, if the adjustment amount per unit of time is 2% per second, the volume is adjusted by 2% each time the mid-air gesture is held by 1 second. Then, the mid-air gesture moves out of the photographing range of the camera, and the continuous adjustment ends. For example, references may be made to FIG. 16.

FIG. 16 is a schematic diagram of a process of detecting a mid-air gesture in a control method based on a mid-air gesture according to an embodiment of this application. Referring to FIG. 16, the camera detects one frame of picture at an interval of preset duration, for example, at an interval of 0.1 second. The terminal device continues to adjust the target function, provided that the picture further includes the mid-air gesture. If the terminal device detects that the picture does not include the mid-air gesture, it indicates that the user considers that the target function has been adjusted to an ideal state and moves the gesture out of the photographing range.

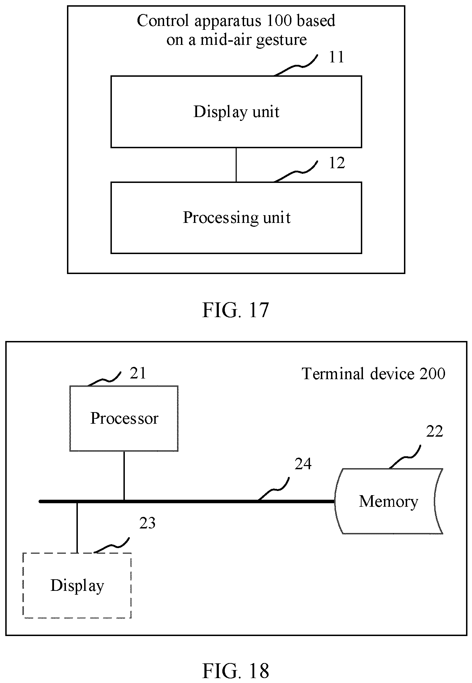

FIG. 17 is a schematic diagram of a structure of a control apparatus based on a mid-air gesture according to an embodiment of this application. The control apparatus based on a mid-air gesture in this embodiment may be a terminal device, or may be a chip applied to the terminal device. The control apparatus based on a mid-air gesture may be configured to perform a function of the terminal device in the foregoing embodiments. As shown in FIG. 17, a control apparatus 100 based on a mid-air gesture may include a display unit 11 and a processing unit 12.

When the control apparatus 100 based on a mid-air gesture is configured to perform the foregoing step of continuously adjusting the target function based on space, the display unit 11 is configured to enable a display to display a user interface of an application; and the processing unit 12 is configured to: obtain a mid-air gesture collected by a camera, and continuously adjust, based on a first distance by which the mid-air gesture moves within a photographing range of the camera, a target function corresponding to the mid-air gesture, where the mid-air gesture is a gesture whose distance from the display is greater than a preset threshold, the target function is a function that is of the application and that can be continuously adjusted, and an adjustment amount for continuous adjustment is positively correlated with the first distance.

In a feasible design, the first distance is determined based on at least a focal length of the camera, a distance between the mid-air gesture and an optical center of the camera, and a second distance, where the second distance is used to indicate a distance by which a mid-air gesture on an imaging plane of the camera moves when the mid-air gesture moves within the photographing range of the camera.

In a feasible design, before continuously adjusting, based on the first distance by which the mid-air gesture moves within the photographing range of the camera, the target function corresponding to the mid-air gesture, the processing unit 12 is further configured to: determine a first location and a second location of the mid-air gesture on the imaging plane of the camera in a movement process, and determine the second distance based on a quantity of pixels between the first location and the second location and a size of the pixel.

In a feasible design, the first distance is less than or equal to a preset distance, and the preset distance is positively correlated with an arm length of an arm of a user.

In a feasible design, before continuously adjusting, based on the first distance by which the mid-air gesture moves within the photographing range of the camera, the target function corresponding to the mid-air gesture, the processing unit 12 is further configured to: recognize a wrist bone point and an elbow bone point of the user, determine the arm length of the user based on three-dimensional coordinates of the wrist bone point and three-dimensional coordinates of the elbow bone point, and determine the preset distance based on the arm length.

In a feasible design, when continuously adjusting, based on the first distance by which the mid-air gesture moves within the photographing range of the camera, the target function corresponding to the mid-air gesture, the processing unit 12 is configured to: starting from recognizing the mid-air gesture, continuously adjust, based on an adjustment amount per unit, the target function corresponding to the mid-air gesture, until the mid-air gesture moves by the first distance, where the adjustment amount per unit of distance is a ratio of a total adjustment amount of the target function to the preset distance.

In a feasible design, when continuously adjusting, based on the first distance by which the mid-air gesture moves within the photographing range of the camera, the target function corresponding to the mid-air gesture, the processing unit 12 is configured to continuously adjust, based on a ratio of the first distance to the preset distance, the target function corresponding to the mid-air gesture.

In a feasible design, before continuously adjusting, based on the first distance by which the mid-air gesture moves within the photographing range of the camera, the target function corresponding to the mid-air gesture, the processing unit 12 is further configured to: input the focal length of the camera, the distance between the mid-air gesture and the optical center of the camera, and the second distance into a pre-trained preset model, and determine the first distance by using the preset model.

In a feasible design, the processing unit 12 is further configured to: obtain a sample data set, where the sample data set includes a plurality of groups of sample data, and one group of sample data includes a focal length of a sample camera, a distance between a sample mid-air gesture and an optical center of the sample camera, and a sample second distance; and train the preset model by using the plurality of groups of sample data in the sample data set.

When the control apparatus 100 based on a mid-air gesture is configured to perform the foregoing step of continuously adjusting the target function based on space, the display unit 11 is configured to enable a display to display a user interface of an application; and the processing unit 12 is configured to: obtain a mid-air gesture collected by a camera, where the mid-air gesture is a gesture whose distance from the display is greater than a preset threshold, and continuously adjust, based on hold duration of the mid-air gesture within a photographing range of the camera, a target function corresponding to the mid-air gesture, where the target function is a function that is of the application and that can be continuously adjusted, and an adjustment amount for continuous adjustment is positively correlated with the hold duration.

In a feasible design, the hold duration includes first duration and second duration. In a first time period corresponding to the first duration, the mid-air gesture is continuously translated. In a second time period corresponding to the second duration, the mid-air gesture is still. The first time period is earlier than the second time period.

In a feasible design, when continuously adjusting, based on the hold duration of the mid-air gesture within the photographing range of the camera, the target function corresponding to the mid-air gesture, the processing unit 12 is configured to: determine an adjustment amount per unit of time, and starting from recognizing the mid-air gesture, continuously adjust, based on the adjustment amount per unit of time, the target function corresponding to the mid-air gesture, until the mid-air gesture no longer appears within the photographing range of the camera.

In a feasible design, when the terminal device recognizes the mid-air gesture, the display unit 11 is further configured to display a function origin on the display, where the function origin is used to indicate that the terminal device has recognized the mid-air gesture and has waked up a function of the mid-air gesture.

In a feasible design, functions that are of different applications and that can be continuously adjusted correspond to a same mid-air gesture.

In a feasible design, different functions that are of a same application and that can be continuously adjusted correspond to different mid-air gestures.

In a feasible design, the target function includes any one of the following functions: volume adjustment, audio/video progress adjustment, air-conditioner temperature adjustment, chair-back height adjustment, 360° around-view angle-of-view adjustment, vehicle-window height adjustment, skylight size adjustment, air-conditioner air volume adjustment, and atmosphere-lamp brightness adjustment.

In a feasible design, when recognizing the mid-air gesture made by the user within the photographing range of the camera, the processing unit 12 is configured to: continuously perform photographing within the photographing range of the camera by using the camera; determine whether a latest photographed image frame includes the mid-air gesture; and if the latest photographed image frame includes the mid-air gesture, recognize the mid-air gesture made by the user within the photographing range of the camera.

FIG. 18 is a schematic diagram of a structure of a terminal device according to an embodiment of this application. As shown in FIG. 18, the terminal device 200 includes:
a processor 21 and a memory 22.

The memory 22 stores a computer execution instruction.

The processor 21 executes the computer execution instruction stored in the memory 22, to implement the foregoing method performed by the terminal device.

Optionally, the terminal device 200 further includes a display 23 (shown by a dashed-line box in FIG. 18), configured to display a user interface of an application.

The processor 21, the memory 22, and the display 23 may be connected by using a bus 24.

In the foregoing implementation of the communication apparatus, the memory and the processor are electrically connected to each other directly or indirectly, to implement transmit or exchange data, that is, the memory and the processor may be connected through an interface, or may be integrated together. For example, these elements may be electrically connected to each other by using one or more communication buses or signal lines, for example, may be connected to each other by using a bus. The memory stores a computer execution instruction for implementing a data access control method, and includes at least one software functional module that can be stored in the memory in a form of software or firmware. The processor performs various function applications and data processing by running a software program and a module that are stored in the memory.

The memory may be but is not limited to a random access memory (Random Access Memory, RAM for short), a read-only memory (Read Only Memory, ROM for short), a programmable read-only memory (Programmable Read-Only Memory, PROM for short), an erasable programmable read-only memory (Erasable Programmable Read-Only Memory, EPROM for short), or an electrically erasable programmable read-only memory (Electric Erasable Programmable Read-Only Memory, EEPROM for short). The memory is configured to store a program. After receiving an execution instruction, the processor executes the program. Further, the software program and the module in the memory may further include an operating system, where the operating system may include various software components and/or drivers that are used to manage system tasks (for example, memory management, storage device control, and power management), and may communicate with various hardware or software components, to provide a running environment of another software component.

The processor may be an integrated circuit chip and has a signal processing capability. The processor may be a general purpose processor, including a central processing unit (Central Processing Unit, CPU for short), a network processor (Network Processor, NP for short), and the like. The processor may implement or perform the methods, steps, and logical block diagrams that are disclosed in embodiments of this application. The general-purpose processor may be a microprocessor, or the processor may be any conventional processor or the like.

Based on the foregoing, this application further provides a chip, including a logic circuit and an input interface. The input interface is configured to obtain to-be-processed data. The logic circuit is configured to perform the technical solutions on the terminal device side in the foregoing method embodiments on the to-be-processed data, to obtain processed data.

Optionally, the chip may further include an output interface, where the output interface is configured to output the processed data.

The to-be-processed data obtained by the input interface includes a first movement distance and the like of a mid-air gesture within a photographing range, and the processed data output by the output interface includes an adjustment amount for continuous adjustment and the like.

This application further provides a computer-readable storage medium. The computer-readable storage medium is used to store a program, and when being executed by a processor, the program is used to execute the technical solutions of the terminal device in the foregoing embodiments.

An embodiment of this application further provides a computer program product. When the computer program product runs on a terminal device, the terminal device is enabled to implement the technical solutions in the foregoing embodiments.

A person of ordinary skill in the art may understand that all or some of the steps of the method embodiments may be implemented by a program instructing relevant hardware. The program may be stored in a computer-readable storage medium. When the program is executed, the steps of the foregoing method embodiments are performed. The foregoing storage medium includes any medium that can store program code, for example, a ROM, a RAM, a magnetic disk, or an optical disc. A specific type of the medium is not limited in this application.

## Claims

1. A control method based on a mid-air gesture, comprising:

   enabling a display to display a user interface of an application;
   obtaining a mid-air gesture collected by a camera, wherein the mid-air gesture is a gesture whose distance from the display is greater than a preset threshold; and
   continuously adjusting, based on hold duration of the mid-air gesture within a photographing range of the camera, a target function corresponding to the mid-air gesture, wherein the target function is a function that is of the application and that can be continuously adjusted, and an adjustment amount for continuous adjustment is positively correlated with the hold duration.

2. The method according to claim 1, wherein the hold duration comprises first duration and second duration, in a first time period corresponding to the first duration, the mid-air gesture is continuously translated, and in a second time period corresponding to the second duration, the mid-air gesture is still, wherein the first time period is earlier than the second time period.

3. The method according to claim 2, in a first time period corresponding to the first duration, detecting that the mid-air gesture moves, and determining a movement direction of the mid-air gesture is continuously translated, and determining a target function of the mid-air gesture based on the movement direction.

4. The method according to any one of claims 1 to 3, further comprising:
   when a terminal device recognizes the mid-air gesture, enabling the display to display a function origin, wherein the function origin is used to indicate that the terminal device has recognized the mid-air gesture and wakes up a function of the mid-air gesture.

5. The method according to any one of claims 1 to 4, wherein
   functions that are of different applications and that can be continuously adjusted correspond to a same mid-air gesture.

6. The method according to any one of claims 1 to 5, wherein

different functions that are of a same application and that can be continuously adjusted correspond to different mid-air gestures.

7.  The method according to any one of claims 1 to 6, wherein
    the target function comprises any one of the following functions: volume adjustment, audio/video progress adjustment, air-conditioner temperature adjustment, chair-back height adjustment, 360° around-view angle-of-view adjustment, vehicle-window height adjustment, skylight size adjustment, air-conditioner air volume adjustment, and atmosphere-lamp brightness adjustment.

8.  An electronic device, comprising:

    one or more processors;
    one or more memories; and
    one or more computer programs, wherein the one or more computer programs are stored in the one or more memories, the one or more computer programs comprise instructions, and when the instructions are executed by the electronic device, the electronic device is enabled to perform the method according to any one of claims 1 to 7.

9.  A computer-readable storage medium, wherein the computer-readable storage medium stores instructions, and when the instructions are run on an electronic device, the electronic device is enabled to perform the method according to any one of claims 1 to 7.

In-vehicle terminal 100

Travel system 102
- Engine 118
- Drive apparatus 120
- Energy source 119
- Wheel 121

Computer system 112
- Processor 113
- Data storage apparatus 114
  - Instruction 115

Sensor system
- Global positioning system 122
- Inertial measurement unit 124
- Radar 126
- Laser rangefinder 128
- Camera 130

Control system 106
- Steering system 132
- Throttle 134
- Braking unit 136
- Sensor fusion algorithm 138
- Computer vision system 140
- Route control system 142
- Obstacle avoidance system 144

Peripheral device 108
- Wireless communication system 146
- Vehicle-mounted computer 148
- Microphone 150
- Speaker 152

Power supply 110

User interface 116

FIG. 1

201

Enable a display to display a user interface of an application

202

Obtain a mid-air gesture collected by a camera, where the mid-air gesture is a gesture whose distance from the display is greater than a preset threshold

203

Continuously adjust, based on a first distance by which the mid-air gesture moves within a photographing range, a target function corresponding to the mid-air gesture, where an adjustment amount for continuous adjustment is positively correlated with a first distance by which the mid-air gesture moves within the photographing range, or an adjustment amount for continuous adjustment is positively correlated with hold duration of the mid-air gesture within the photographing range

FIG. 2A

Dashboard screen

Primary screen

Secondary screen

Secondary screen

FIG. 2B

EP 4 553 631 A2

Translate rightward

FIG. 3

Make a wakeup gesture → Detect the wakeup gesture

Detect the wakeup gesture ↓

Wake up a function of the mid-air gesture

Make a function gesture → Recognize a target function corresponding to the function gesture

↓

Continuously adjust the target function

Audio/Video progress adjustment

Volume adjustment

Air-conditioner temperature adjustment

Air-conditioner air volume adjustment

360° around-view angle-of-view adjustment

Chair-back height adjustment

Vehicle-window height adjustment

Skylight size adjustment

...

Atmosphere-lamp brightness adjustment

FIG. 4A

```
Make a mid-air gesture  ──▶  Detect the mid-air gesture
                                        │
                                        ▼
                              Wake up a function of the mid-air
                                        gesture
                                        │
                                        ▼
                              Recognize a target function
                              corresponding to the mid-air
                                        gesture
                                        │
                                        ▼
                              Continuously adjust the target
                                        function
```

Audio/Video progress adjustment

Volume adjustment

Air-conditioner temperature adjustment

Air-conditioner air volume adjustment

360° around-view angle-of-view adjustment

Chair-back height adjustment

Vehicle-window height adjustment

Skylight size adjustment

...

Atmosphere-lamp brightness adjustment

FIG. 4B

Fast-forward

Speed   High definition   Episode

Translate rightward

~
TO
FIG. 5B

FIG. 5A

EP 4 553 631 A2

CONT.
FROM
FIG.5A
~

26°C
Current outdoor
temperature: 32°C

On/Off        Mode

+        —

Increase the temperature

Translate rightward

FIG. 5B

Fast-forward

Speed  High
definition  Episode

Translate rightward

Translate upward

Increase the volume

FIG. 6

EP 4 553 631 A2

```
                          ┌─────────┐
                          │  Start  │
                          └────┬────┘
                               │                    301
    ┌──────────────────────────▼──────────────────────┐
    │  A terminal device detects that a                 │
    │  user makes a mid-air gesture                     │
    └──────────────────────────┬──────────────────────┘
                               │                    302
    ┌──────────────────────────▼──────────────────────┐
    │  Determine, from an image frame,                  │
    │  a location area in which the                     │
    │  mid-air gesture is located                       │
    └──────────────────────────┬──────────────────────┘
                               │                    303
    ┌──────────────────────────▼──────────────────────┐
    │  Extract a key point of the mid-air               │
    │  gesture from the location area                   │
    └──────────────────────────┬──────────────────────┘
                               │                    304
    ┌──────────────────────────▼──────────────────────┐
    │  Activate a function of the mid-air               │
    │  gesture                                          │
    └──────────────────────────┬──────────────────────┘
                               │                    305
    ┌──────────────────────────▼──────────────────────┐
    │  Determine a target function                      │
    │  corresponding to the mid-air                     │
    │  gesture                                          │
    └───────────────────────────────────────────────┘
```

Select a continuable adjustment manner    306

Space          Time

Determine a first distance    307

Determine hold duration of the mid-air gesture within a photographing range    309

Adjust the target function based on the first distance    308

Adjust the target function based on the hold duration    310

End

FIG. 7

FIG. 8

EP 4 553 631 A2

< Settings

| Wireless network | > |
| Display and brightness | > |
| Continuable adjustment manner | > |
| Navigation and multitasking | > |
| Display and brightness | > |

< Settings

| Wireless network | > |
| Space-based adjustment scheme | > |
| Time-based adjustment scheme | √ > |
| Close | |
| Display and brightness | > |

FIG. 9

FIG. 10

EP 4 553 631 A2

FIG. 11

FIG. 12

TO
FIG. 13B

FIG. 13A

Speed  High
definition  Episode

FIG. 13B

EP 4 553 631 A2

~

Adjustment amount

Speed  High
definition  Episode

EP 4 553 631 A2

Translate rightward

First distance

FIG. 13C

FIG. 14

TO
FIG. 15B

FIG. 15A

Speed | High definition | Episode

FIG. 15B

EP 4 553 631 A2

Adjustment amount

Speed
High
definition
Episode

Translate
rightward

First
duration

FIG. 15C

Record one frame of picture at an interval of 0.1 second for determining

Translate rightward

The air gesture moves, and then moves out of a photographing range after staying still for a period of time

FIG. 16

Control apparatus 100 based
on a mid-air gesture

11

Display unit

12

Processing unit

FIG. 17

21

Processor

Terminal device 200

22

24

Memory

23

Display

FIG. 18